# EUROPEAN PATENT APPLICATION

(11) **EP 3 067 854 A1**
(43) Date of publication of application: **14.09.2016**
(21) Application number: 13897117.1
(22) Date of filing: 07.11.2013
(51) Int. Cl.: G06Q 50/30, B61L 27/00

(54) **PLAN LINKING SYSTEM AND PLAN LINKING METHOD**

(71) Applicant: Hitachi, Ltd., Chiyoda-ku Tokyo 100-8280 (JP)
(72) Inventor: TOMIYAMA, Tomoe, Tokyo 100-8280 (JP); SATOU, Tatsuhiro, Tokyo 100-8280 (JP); TAKAHASHI, Yoshiyasu, Tokyo 100-8280 (JP)
(74) Representative: Moore, Graeme Patrick
(86) International application number: PCT/JP2013/080083
(87) International publication number: WO 2015/068231

(57) **Abstract**

The present invention allows organizations that manage plans coordinated with each other to efficiently and swiftly execute consistent coordination between the plans while maintaining confidentiality of information on the plans as appropriate. A plan coordination system 1000 includes a processing device 1202 configured to perform: processing that generates public data from definition data of plans, receives definitions by a user for information coordinated between plans among process procedures indicated by the public data, applies the definitions by the user to the definition data of the plan, and generates a plan coordination model; processing that notifies the data to a management device of another plan as a coordination destination in the coordination relation at a change event on the definition data, changes the plan coordination model based on a generation result of the other plan reflecting the change event, and notifies the changed data to the management device of the other plan having the coordination relation with the plan changed along with this change; and processing that outputs a generation result of each plan when planning is completed for all plans.

## Description

### [Technical Field]

The present invention relates to a plan coordination system and a plan coordination method.

### [Background Art]

In the fields of transportation services and manufacturing industries, where a plurality of resources are needed to provide a service, the service is provided as planned by creating an operation plan for all the necessary resources. The operation plan of the resources is created by each management organization, and a coordination operation is required if a conflict occurs between the plans. Thus, efforts have been made to create plans feasible as a whole while achieving consistent coordination between the plans.

For example, the following techniques are disclosed as such techniques. Specifically, one of the disclosed techniques referred to as PTL 1 relates to scheduling of a supply chain including allocation of suppliers of components and others, manufacturing schedules of multiple plants, and allocation of delivery resources, and involves creating schedules one after another starting with the allocation of suppliers by sharing information necessary for the scheduling and the scheduling results.

Another one of the disclosed technique referred to as PTL 2 relates to parallel editing of various plans (travel plan, car operation plan, crew operation plan, and other plans) necessary for a railway operation service, and involves allowing the creator of each plan during generation of the plan to specify a part of the plan and plan creators, and to notify the specified plan creators of the specified part of the plan.

In addition, still another one of the disclosed techniques referred to as PTL 3 relates to train and rail yard operation plans at a train operation disorder, and enables information such as the content of any change in the plans and progress information on inspection and cleaning of trains to be exchanged between the train operation plan and the rail yard operation plan at a train operation disorder.

### [Citation List]

### [Patent Literature]

[PTL 1] Japanese Patent Application Publication No. 2011-96141
[PTL 2] Japanese Patent Application Publication No. 2007-62554
[PTL 3] Japanese Patent Application Publication No. 9-226588

### [Summary of Invention]

### [Technical Problem]

As described above, in a business model in which a single service is provided by a combination of plans generated and managed by multiple companies, an operation to achieve consistent coordination between the plans is needed. The conventional techniques can generate plans of multiple organizations while coordinating the plans, but requires a precondition in which all information is shared between the organizations. Thus, these conventional techniques are difficult to apply in a case where any organization has information not to be opened to the other organizations and has information opened only to a specific organization. The above-described operation to achieve the consistent coordination is likely to be done such that: an operation sequence of the plans is fixed in one way and the whole adjustment over all the plans is made with always giving a higher priority to a plan generated earlier than those of the other plans.

To coordinate generation processes of plans, coordination timing and operation itself are manually determined and performed. Thus, it takes a certain amount of time to achieve consistent coordination as a whole. Accordingly, it is difficult to take a swift action to the occurrence of an emergent event related to a plan. In addition, when information based on which a plan is generated has changed, necessary information is not passed to the other plans until generation or update of a plan holding the changed information is completed. As a result, it takes time to generate and update the plans as a whole, which may cause a rework, for example.

The present invention provides a technique that allows organizations that manage plans coordinated with each other to efficiently and swiftly execute a consistent coordination between the plans while maintaining confidentiality of information on the plans as appropriate.

### [Solution to Problem]

A plan coordination system of the present invention that solves the above-described problems includes: a storage device configured to store definition data of plans coordinated with each other; and a processing device configured to perform: a public data generation processing that extracts information on a process procedure in each plan from the definition data of the plan and stores the extracted information on the process procedure as public data between administrators of the plans in the storage device, a coordination data reception processing that receives, through an input device or a predetermined terminal, definitions by a user for an item coordinated between the plans and a restriction condition at coordination related to the item among process procedures indicated by the public data of each plan, a plan coordination model generation processing that applies the definitions of the coordinated item and the restriction condition thus received to the definition data of the plan and generates a plan coordination model that specifies a coordination relation of processes between the plans, a change monitoring processing that monitors a change event on the definition data of the plan through the input device or the predetermined terminal, a change notification processing that determines whether data of the plan to which the change event has occurred is related at least to the coordinated item in the coordination relation of the plan coordination model including the plan, and notifies the data to a management device of another plan as a coordination destination of the plan in the coordination relation when the data is related at least to the coordinated item in the coordination relation, for the other plan, a plan change acquisition processing that receives a plan generation result reflecting the change event of the data from the management device of the other plan, a plan coordination model change processing that changes the plan coordination model by applying the received plan generation result to the coordination relation in the plan coordination model, and notifies the data changed along with the change of the plan coordination model to a management device of another plan having, in the plan coordination model, the coordination relation with the plan of which at least data of the coordinated item has changed due to the change of the plan coordination model, and a plan result management processing that repeatedly executes the change monitoring processing, the change notification processing, the plan change acquisition processing, and the plan coordination model change processing until a completion instruction is received for all plans through the input device or the predetermined terminal, and outputs generation results of plans to an output device or a predetermined terminal when the completion instruction is received for all plans.

A plan coordination method of the present invention causes a computer including a storage device configured to store definition data of plans coordinated with each other, to perform a process including: a public data generation processing that extracts information on a process procedure in each plan from the definition data of the plan and stores the extracted information on the process procedure as public data between administrators of the plans in the storage device, a coordination data reception processing that receives, through an input device or a predetermined terminal, definitions by a user for an item coordinated between plans and a restriction condition at coordination related to the item among process procedures indicated by the public data of each plan, a plan coordination model generation processing that applies the definitions of the coordinated item and the restriction condition thus received to the definition data of the plan and generates a plan coordination model that specifies a coordination relation of processes between the plans, a change monitoring processing that monitors a change event on the definition data of the plan through the input device or the predetermined terminal, a change notification processing that determines whether data of the plan to which the change event has occurred is related at least to the coordinated item in the coordination relation of the plan coordination model including the plan, and notifies the data to a management device of another plan as a coordination destination of the plan in the coordination relation when the data is related at least to the coordinated item in the coordination relation, for the plan in the coordination destination, a plan change acquisition processing that receives a plan generation result reflecting the change event of the data from the management device of the plan as the coordination destination, a plan coordination model change processing that changes the plan coordination model by applying the received plan generation result to the coordination relation in the plan coordination model, and notifies the data changed along with the change of the plan coordination model to a management device of another plan having, in the plan coordination model, a coordination relation with the plan of which at least data of the coordinated item has changed due to the change of the plan coordination model, and a plan result management processing that repeatedly executes the change monitoring processing, the change notification processing, the plan change acquisition processing, and the plan coordination model change processing until a completion instruction is received for all plans through the input device or the predetermined terminal, and outputs generation results of plans to an output device or a predetermined terminal when the completion instruction is received for all plans.

### [Advantageous Effects of Invention]

The present invention allows organizations that manage plans coordinated with each other to efficiently and swiftly execute a consistent coordination between the plans while maintaining confidentiality of information on the plans as appropriate.

### [Brief Description of Drawings]

[Fig. 1] Fig. 1 is a configuration diagram of a network including a plan coordination system according to the present embodiment.
[Fig. 2] Fig. 2 illustrates an exemplary configuration of the plan coordination system in the present embodiment.
[Fig. 3] Fig. 3 illustrates an exemplary basis flow of a plan coordination method in the present embodiment.
[Fig. 4] Fig. 4 illustrates an exemplary configuration of a plan coordination model in the present embodiment.
[Fig. 5] Fig. 5 illustrates an exemplary car operation plan in the present embodiment.
[Fig. 6] Fig. 6 illustrates an exemplary in-yard shunting plan in the present embodiment.
[Fig. 7] Fig. 7 illustrates an exemplary car allocation plan in the present embodiment.
[Fig. 8] Fig. 8 illustrates operation information included in plan definition information in the present embodiment.
[Fig. 9] Fig. 9 illustrates resource information included in the plan definition information in the present embodiment.
[Fig. 10] Fig. 10 illustrates allocation relation information included in the plan definition information in the present embodiment.
[Fig. 11] Fig. 11 illustrates a basic part of the process information included in the plan definition information in the present embodiment.
[Fig. 12] Fig. 12 illustrates a flow rate part of the process information included in the plan definition information in the present embodiment.
[Fig. 13] Fig. 13 illustrates an example 1 of the plan coordination model in the present embodiment.
[Fig. 14] Fig. 14 illustrates an example 2 of the plan coordination model in the present embodiment.
[Fig. 15] Fig. 15 illustrates the structure of a record of plan coordination model state information and exemplary data belonging to the record in the present embodiment.
[Fig. 16] Fig. 16 illustrates an exemplary input screen for a plan coordination link in the present embodiment.
[Fig. 17] Fig. 17 illustrates an exemplary setting screen for an evaluate index in the present embodiment.
[Fig. 18] Fig. 18 illustrates a detailed exemplary flow 1 of the plan coordination method in the present embodiment.
[Fig. 19] Fig. 19 illustrates a detailed exemplary flow 2 of the plan coordination method in the present embodiment.
[Fig. 20] Fig. 20 illustrates the structure of a record of coordination variable change history information and exemplary data belonging to the record in the present embodiment.

### [Description of Embodiments]

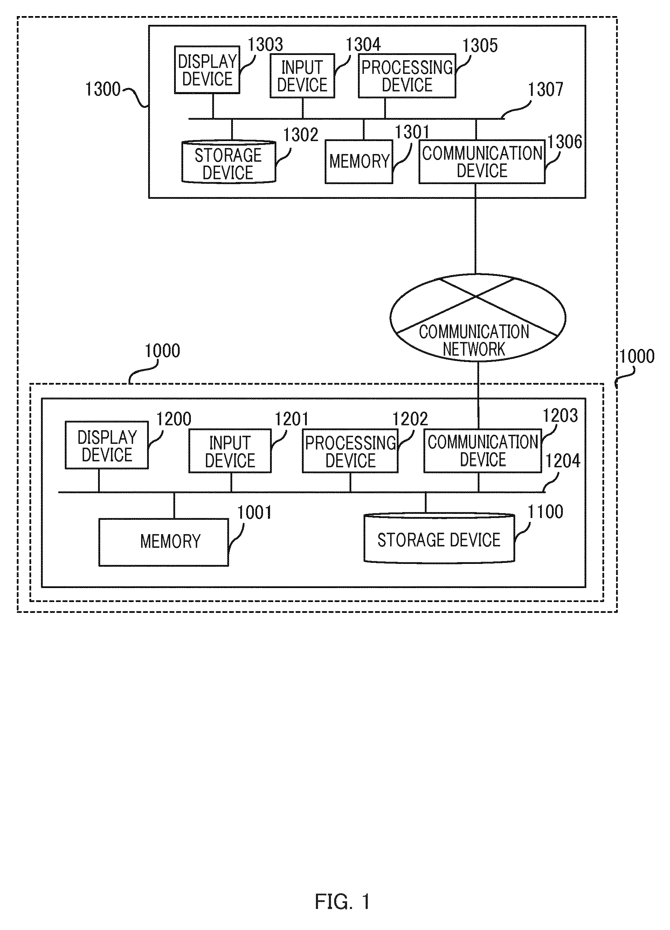

Embodiments of the present invention will be described below in detail with reference to the accompanying drawings. Fig. 1 illustrates an exemplary configuration of a network including a plan coordination system 1000 according to the present embodiment. The plan coordination system 1000 illustrated in Fig. 1 is a computer system that allows organizations that manage plans coordinated with each other to efficiently and swiftly execute consistent coordination between the plans while maintaining confidentiality of information on the plans as appropriate.

This plan coordination system 1000 is coupled with a plan generating apparatus 1300 (plan management apparatus) configured to manage a car operation plan, an in-yard shunting plan, and a car allocation plan in a railway, through a communication network, and receives, for example, necessary data and update instructions from the plan generating apparatus 1300. Alternatively, the plan coordination system 1000 may include the plan generating apparatus 1300.

Such plan coordination system 1000 includes a memory 1001, a storage device 1100, a display device 1200, an input device 1201, a processing device 1202, a communication device 1203, and a data bus 1204 coupling these devices. The plan generating apparatus 1300 includes a memory 1301, a storage device 1302, a display device 1303, an input device 1304, a processing device 1305, a communication device 1306, and a data bus 1307 coupling these devices. The storage device 1302 of the plan generating apparatus 1300 stores information on a plan to be generated by this plan generating apparatus 1300. The memory 1301 stores either or both of a program that receives, from a user, a change of the information on a plan to be generated by the plan generating apparatus 1300 or a program that automatically generates the information on a plan. It is assumed that one or more apparatuses corresponding to the plan generating apparatus 1300 exist depending on an operational configuration of a system and distribution of planning operations.

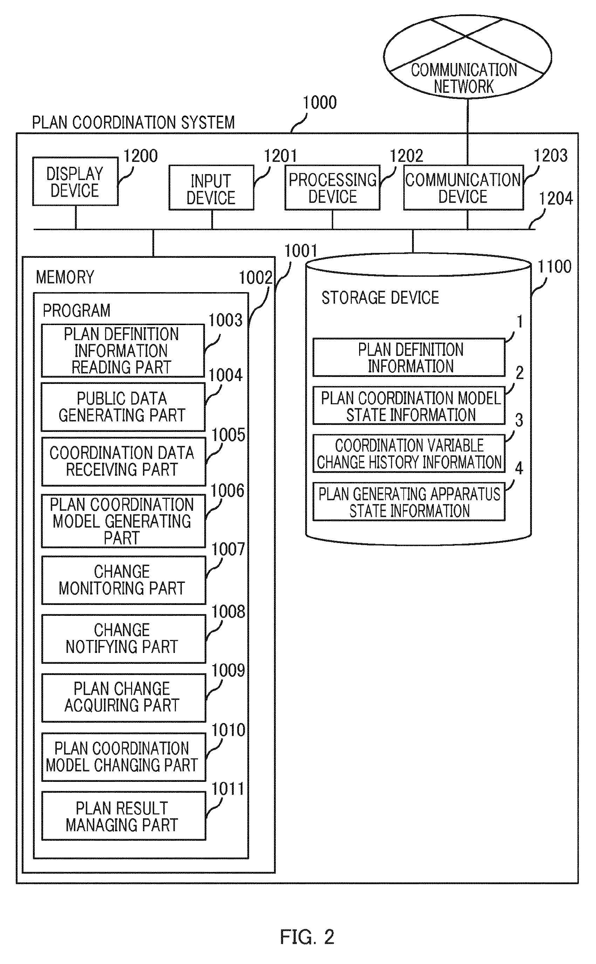

The following describes the configuration of hardware included in the plan coordination system 1000 according to the present embodiment and the functionality thereof. Each functional component described below is implemented by executing a program 1002 included in the plan coordination system 1000. Fig. 2 is a block diagram of an exemplary configuration of the plan coordination system 1000. As described above, the plan coordination system 1000 includes the memory 1001, the storage device 1100, the display device 1200, the input device 1201, the processing device 1202, the communication device 1203, and the data bus 1204 coupling these devices.

Among these devices, the processing device 1202 including a CPU implements functions by executing various programs stored in the memory 1001. The display device 1200 includes a display and displays a result of processing at the processing device 1202. The input device 1201 is a device for inputting an instruction to a computer, such as a keyboard and a mouse, and receives an input from the user. The communication device 1203 exchanges various data and commands with other apparatuses such as the plan generating apparatus 1300 through a communication network such as a local area network (LAN). The storage device 1100 includes a non-volatile storage device such as a hard disk drive, and stores various data for the plan coordination system 1000 to execute processing. The memory 1001 is a transitory storage device that stores the various programs 1002 of which processing is to be executed by the plan coordination system 1000, and temporary data.

The storage device 1100 stores plan definition information 1, plan coordination model state information 2, coordination variable change history information 3, and plan generating apparatus state information 4. The memory 1001 stores, as functions implemented by the programs 1002, a plan definition information reading part 1003, a public data generating part 1004, a coordination data receiving part 1005, a plan coordination model generating part 1006, a change monitoring part 1007, a change notifying part 1008, a plan change acquiring part 1009, a plan coordination model changing part 1010, and a plan result managing part 1011.

Among these, the plan definition information reading part 1003 reads the plan definition information 1 stored in the storage device 1100. The plan definition information 1 is acquired by the plan coordination system 1000 from the plan generating apparatus 1300 through the communication network and stored in advance.

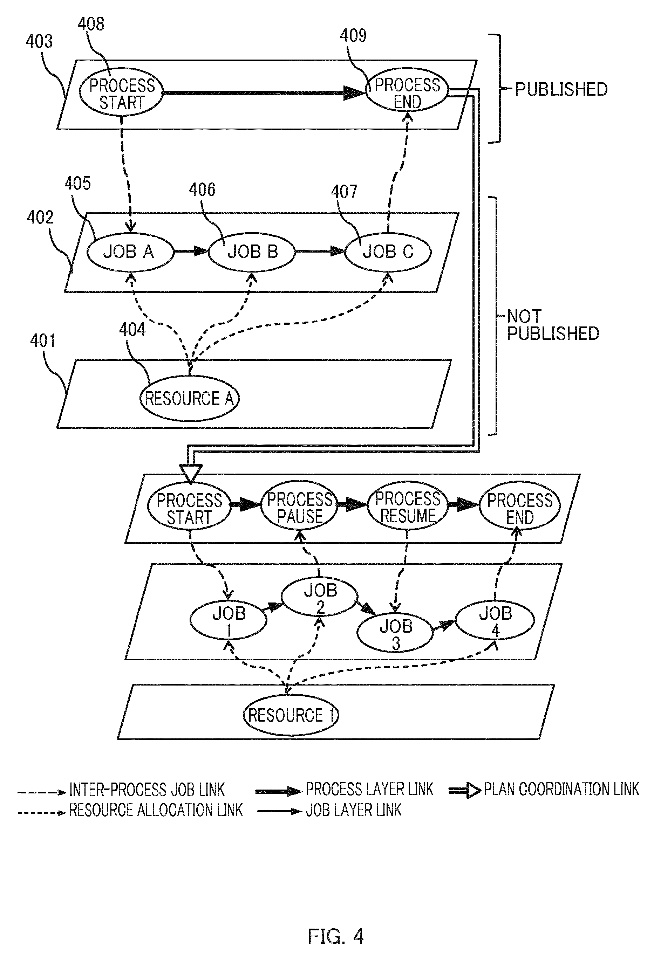

The public data generating part 1004 generates a basic configuration of a plan coordination model based on the plan definition information 1 read by the plan definition information reading part 1003 from the storage device 1100, and generates public data based on the generated basic configuration. The generated basic configuration of a plan coordination model and its part as the public data are described in detail with reference to Fig. 4.

The coordination data receiving part 1005 generates, using the public data generated by the public data generating part 1004, an input screen that receives: a data item to be coordinated between individual plans; an evaluation index; and a restriction condition at coordination from the user, and then the coordination data receiving part 1005 presents the input screen to the user through the display device 1200, and receives the data item to be coordinated between individual plans, the evaluation index, and the restriction condition at coordination from the user through the input device 1201.

In the present embodiment, the display of the input screen and the reception of each item are performed through the display device 1200 and the input device 1201, respectively, but may be alternatively performed through the display device 1303 and the input device 1304, respectively, of the plan generating apparatus 1300 through the communication device 1203.

The plan coordination model generating part 1006 generates a plan coordination model based on the basic configuration of a plan coordination model generated by the public data generating part 1004, and the data item, the evaluation index, and the restriction condition at coordination received by the coordination data receiving part 1005. The generated plan coordination model is described in detail with reference to Figs. 4, 13, and 14, for example.

The change monitoring part 1007 monitors any change of the value of data defined by the plan definition information 1 due to processing by the input device 1201 and the plan generating apparatus 1300, and having detected a change of any data, determines, by using the plan coordination model generated by the plan coordination model generating part 1006, a plan that directly uses the changed data and a plan that indirectly uses the changed data through an output from the plan, and transmits the change of the data through the communication device 1203 to the plan generating apparatus 1300 that directly uses the changed data.

The change notifying part 1008 also notifies the plan generating apparatus 1300 that stores a plan determined to indirectly use the changed data by the change monitoring part 1007 of the change of the data. The change notifying part 1008 also notifies the corresponding plan generating apparatus 1300 of the content of a change of a plan coordination model by the plan coordination model changing part 1010 to be described later. This notification involves conversion of a change of data or the content of a change of a plan coordination model into a change of corresponding data of each plan, and instruction of the change of converted data and regeneration of a plan to the plan generating apparatus 1300 as a notification target through the communication device 1203.

The plan change acquiring part 1009 acquires a plan generation result from the plan generating apparatus 1300 to which the change monitoring part 1007 and the change notifying part 1008 transmit the change of data or the content of the change of a plan coordination model.

The plan coordination model changing part 1010 changes the plan coordination model so as to reflect the plan generation result acquired by the plan change acquiring part 1009.

The plan managing part 1011 monitors whether an instruction to end planning is input through the input device 1201, and if the instruction is input, converts the plan coordination model into individual plans and presents them to the user through the display device 1200. Alternatively, the plan managing part 1011 monitors whether a plan generation result reflecting the content of the change of data or the content of the change of the plan coordination model notified through the change notifying part 1008 is transmitted from the plan generating apparatus 1300, and if the plan generation result is transmitted from all plan generating apparatuses to which the content of a change is notified, converts the plan coordination model into individual plans, and presents them to the user through the display device 1200. Alternatively, each time a plan generation result is transmitted from an individual plan generating apparatus, the plan result managing part 1011 converts the plan coordination model into individual plans and presents them to the user through the display device 1200. Alternatively, the plan managing part 1011 may convert the plan coordination model into individual plans, transmit them to the respective plan generating apparatuses 1300 through the communication device 1203, and present them to the user through the display device 1303 of each plan generating apparatus 1300. As described above, to present the plan coordination model converted into individual plans to the user through the display device 1303 of each plan generating apparatus 1300, the plan result managing part 1011 may monitor whether a plan generation result reflecting the content of the change of data or the content of the change of the plan coordination model notified through the change notifying part 1008 is transmitted from the plan generating apparatus 1300, and convert the plan coordination model into individual plans if a plan generation result is transmitted from all plan generating apparatuses to which the content of the change is notified, in addition to converting the plan coordination model into individual plans in response to the instruction to end planning input through the input device 1201. The instruction to end planning may be received through the input device 1304 of each plan generating apparatus 1300. In this case, when the instruction to end planning has been received from all plan generating apparatuses, a plan result is presented to the user.

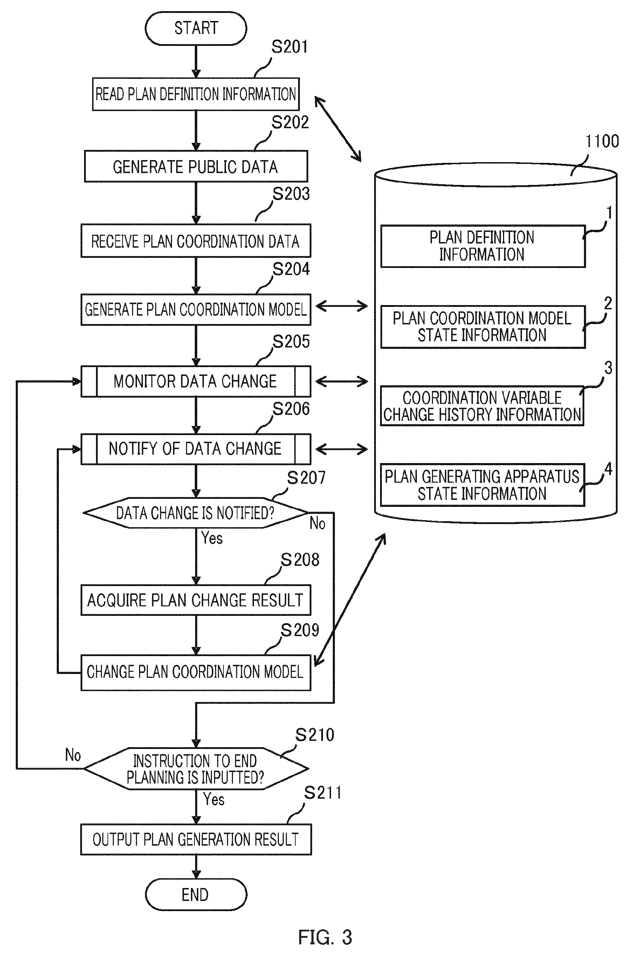

Fig. 3 is a flowchart of an exemplary basic job procedure of the plan coordination system 1000. In this procedure, the plan definition information reading part 1003 in the plan coordination system 1000 reads the plan definition information 1 stored in the storage device 1100 into the memory 1001 (step S201).

Next, the public data generating part 1004 generates the basic configuration of a plan coordination model based on the plan definition information 1 read at the above-described step S201, and generates public data from the generated basic configuration (step S202). The generated basic configuration of a plan coordination model and the public data are described later in detail with reference to Fig. 4.

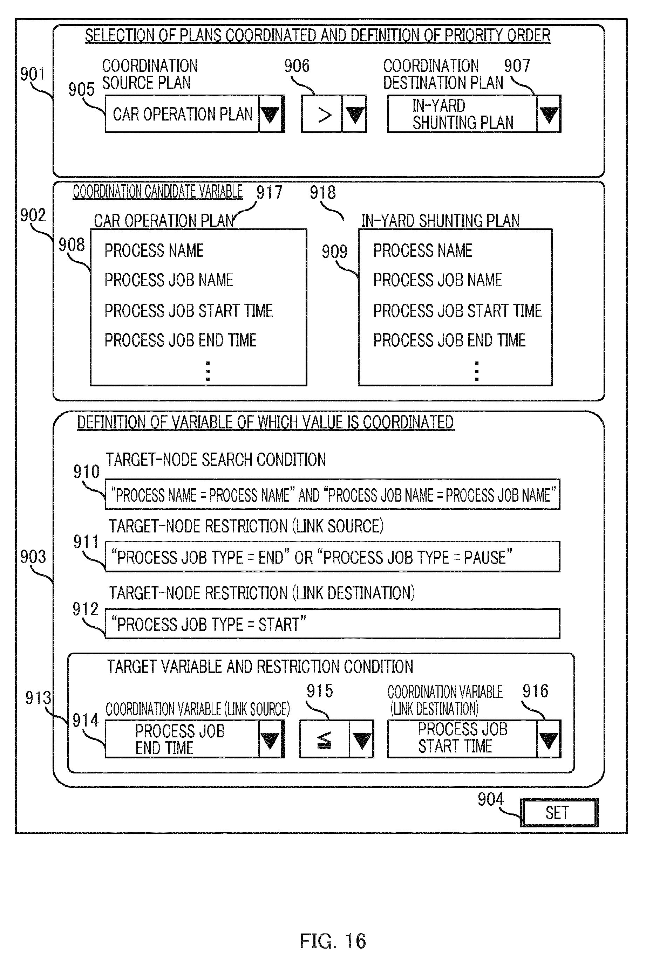

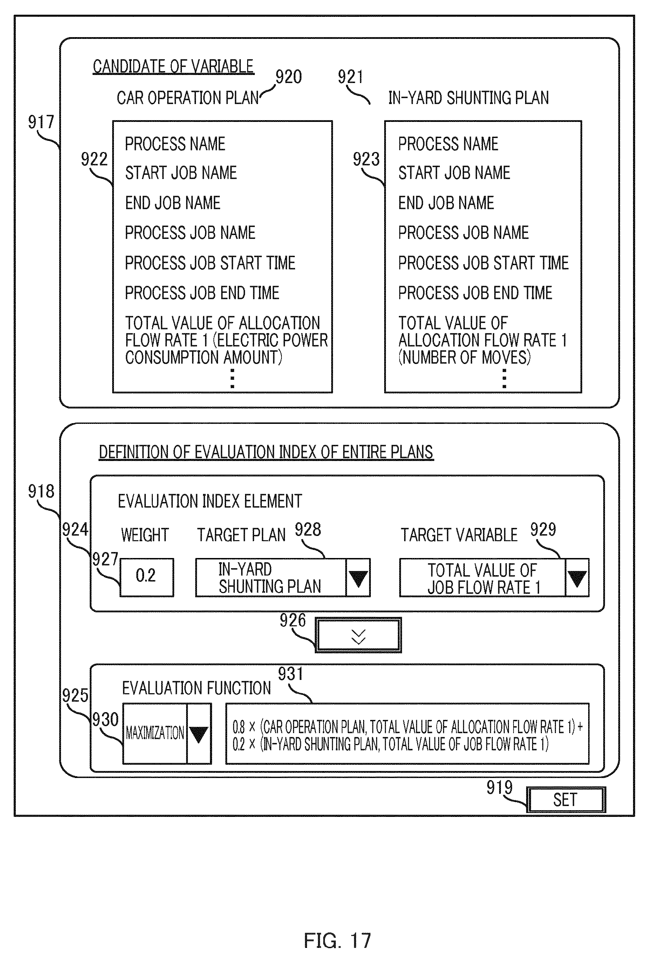

Subsequently, the coordination data receiving part 1005 generates, using the public data generated at the above-described step S202, an input screen that receives: a data item to be coordinated between individual plans; an evaluation index; and a restriction condition at coordination, and the coordination data receiving part 1005 presents the input screen to the user through the display device 1200, and receives from the user through the input device 1201, the data item to be coordinated between individual plans, the evaluation index, and the restriction condition at coordination (step S203). The generated input screen and the received input item are described later in detail with reference to Figs. 16 and 17. In the present embodiment, the display of the input screen and the reception of each item are performed through the display device 1200 and the input device 1201, respectively, but for the another way, may be performed through the display device 1303 and the input device 1304, respectively, of each plan generating apparatus 1300 through the communication device 1203.

Next, the plan coordination model generating part 1006 generates a plan coordination model based on the basic configuration generated at the above-described step S202 and the data item, the evaluation index, and the restriction condition at coordination received at step S203 (step S204). Details of the generated plan coordination model and its generation procedure are described later with reference to Figs. 4, 13, and 14.

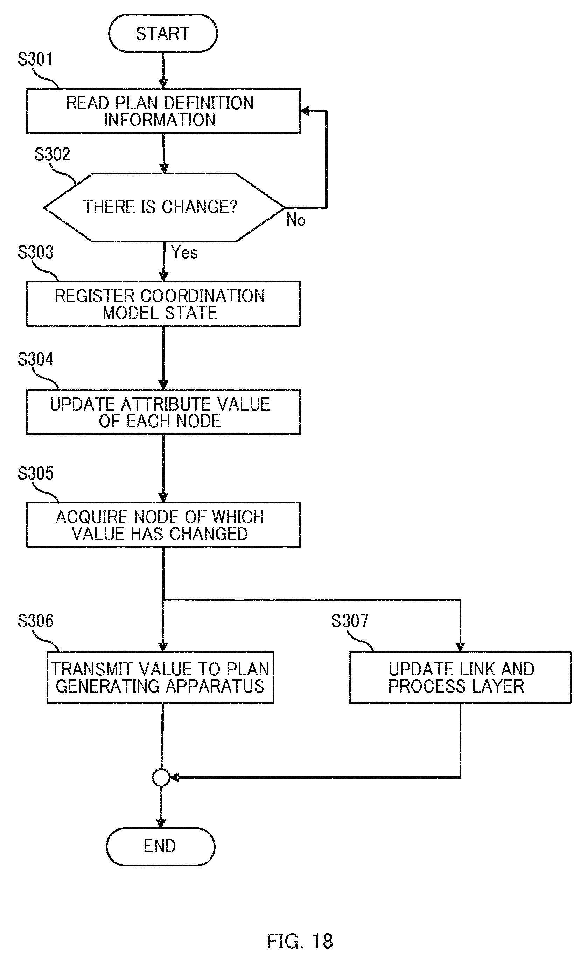

Subsequently, the change monitoring part 1007 monitors any change of a value of data defined by the plan definition information 1, and when a change of data occurs, determines, by using the plan coordination model generated at step S204, a plan that directly uses the changed data and a plan that indirectly uses the changed data through an output from the plan, and transmits the change of the data and an instruction of regeneration of a plan through the communication device 1203 to the plan generating apparatus 1300 that directly uses the changed data (step S205). This change monitoring procedure is described in detail with reference to Fig. 18.

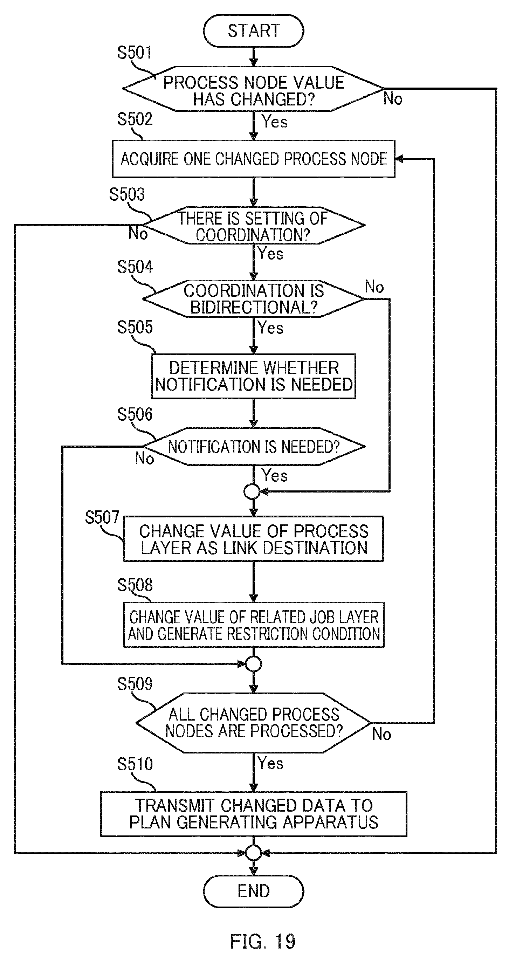

The change notifying part 1008 notifies the plan generating apparatus 1300 for the plan that is determined at the above-described step S205 as a plan that indirectly uses the changed data of the change of the data (step S206). The change notifying part 1008 also notifies the corresponding plan generating apparatus 1300 of the content of the change of the plan coordination model at step S209 to be described later. This notification involves conversion of the change of data or the content of the change of the plan coordination model into a change of data stored by each plan, and transmission of the converted data and an instruction of regeneration of a plan to the plan generating apparatus 1300 as a notification target through the communication device 1203. This notification procedure is described in detail with reference to Fig. 19.

The plan change acquiring part 1009 determines whether the change of data or the content of the change of the plan coordination model is notified to the plan generating apparatus 1300 at the above-described steps S205 and S206 (S207), and the plan change acquiring part 1009 executes step S208 if the notification is executed (S207: YES) or step S210 if the notification is not executed (S207: NO).

Subsequently, the plan change acquiring part 1009 acquires plan generation results from all plan generating apparatuses 1300 notified of the change of data or the content of the change of the plan coordination model at the above-described steps S205 and S206 (step S208). If a plurality of the plan generating apparatuses 1300 is notified of the change of data or the content of the change of the plan coordination model, step S209 is executed after it is confirmed that all plan generating apparatuses 1300 are in the state of "plan generation completed" by referring to the plan generating apparatus state information 4.

The plan coordination model changing part 1010 changes the plan coordination model so as to reflect the plan generation result acquired at the above-described step S208, and executes step S206 again (step S209).

Next, the plan result managing part 1011 determines whether an instruction to end planning is input through the input device 1201 (S210), and executes step S211 if the instruction is input (S210: YES) or step S205 again if the instruction is not input (S210: NO). The instruction to end planning may be received through the input device 1304 of each plan generating apparatus 1300. In this case, the plan generating apparatus 1300 that has received the instruction to end planning is sequentially excluded as a processing target, and when the instruction to end planning is received from all plan generating apparatuses 1300, step S211 is executed.

Finally, the plan result managing part 1011 separates the current plan coordination model into coordinated individual plans, and presents them to the user through the display device 1200 (step S211). Alternatively, each individual plan may be transmitted to the corresponding plan generating apparatus 1300 through the communication device 1203, and presented to the user through the display device 1303 of the plan generating apparatus 1300.

The following describes a plan coordination model as a basic concept according to the present invention, an exemplary plan and information used in the present embodiment, and then an exemplary input screen and the above-described steps S205 and S206 in detail.

First, an exemplary basic configuration of a plan coordination model in the present embodiment is described with reference to Fig. 4. A plan coordination model generated by the plan coordination system 1000 represents one plan with three layers of a resource layer 401, an operation layer 402, and a process layer 403.

Among these layers, the resource layer 401 defines a resource of a planning target and represents one resource as one node (hereinafter referred to as a resource node). This resource is a job agent that performs each job defined by the job layer 402 to be described later or equipment used in the job, and corresponds to an operator and an operating machine, for example. The resource node can have definitions of zero or more types of resource flow rates. This resource flow rate indicates the degree of influence of an allocated resource when a value of each job included in a job procedure changes depending on the allocated resource in calculation of the sum of the value. This degree of influence may be, for example, a job efficiency (fraction of a standard job time to complete a job) depending on the skill of an operator, and a job unit price.

The job layer 402 defines a job of a planning target, and represents one job as one node (hereinafter referred to as a job node) and a job procedure as a link between individual nodes (hereinafter referred to as a job layer link). Specifically, a link is generated between individual nodes where a node earlier in a job execution order is set as a link source and a node later in the job execution order is set as a link destination. The job node can have definitions of zero or more types of job flow rates. The job flow rate is defined as what is to be treated as the sum of values of jobs included in a job procedure. The job flow rate is, for example, a job necessary time and the load capacity and kilometrage of a truck.

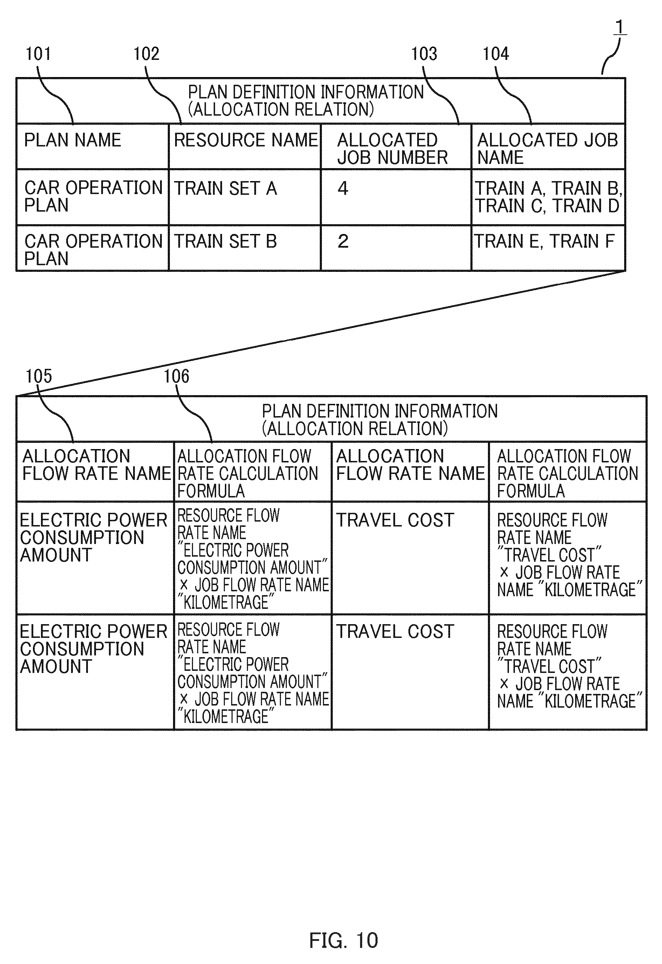

An allocation result of a resource to a job determined by each plan is represented by a link (hereinafter referred to as a resource allocation link) coupling the resource layer 401 and the job layer 402. Specifically, the allocation result is represented by a link coupling a resource node and a job node representing a job to which a resource represented by the resource node is allocated. In the example illustrated in Fig. 4, "RESOURCE A" denoted as a resource node 404 is allocated to "JOB A" corresponding to a job node 405, "JOB B" corresponding to a job node 406, and "JOB C" corresponding to a job node 407. The resource allocation link can have definitions of zero or more types of link allocation flow rates. The allocation flow rate is defined as what is to be treated as the sum of values of jobs included in a job procedure, of which value changes depending on an allocated resource. The allocation flow rate is, for example, a job necessary time in accordance with the skill of a resource, and a job cost reflecting the unit price of the resource. The allocation flow rate is calculated by a calculation formula defined in advance by using the job flow rate of a job node and the resource flow rate of a resource node coupled by the resource allocation link. An exemplary calculation formula is described later with reference to Fig. 10.

The process layer 403 defines start, pause, resume, and end of the job procedure defined by the job layer 402 described above, each of them is represented by one node (hereinafter referred to as a process node), and a flow from the start to the end of the job procedure is represented by a link between individual nodes (hereinafter referred to as a process layer link). Each process node can have definitions of zero or more types of job flow rates and zero or more types of allocation flow rates. The type of the job flow rate is the same as the type of the job flow rate of the job node, and the type of the allocation flow rate is the same as the type of the allocation flow rate of the resource allocation link.

The following describes the meanings of the job flow rate and the allocation flow rate at the process node. First, the job flow rate is described.

### 1. When the process node represents the start of the job procedure:

The job flow rate represents an initial value of calculation of the sum of job flow rates of job nodes included in the job procedure. For example, to include, in calculation of a job time when the present process ends, job times of previous processes managed by other plans, the total job time of the previous processes is set as the job flow rate.

### 2. When the process node represents the pause of the job procedure:

The job flow rate represents the sum of job flow rates from the start to the pause of the job procedure. However, if the job procedure includes a pause or a resume, the job flow rate represents the sum of the job flow rate from the last resume to the pause. The job flow rate is calculated by adding the job flow rate of a process node representing the start (or resume) of the job procedure and the sum of the job flow rates of all job nodes included between the start (or resume) and the pause of the job procedure.

### 3. When the process node represents the resume of the job procedure:

The job flow rate represents an initial value for calculating the sum of job flow rates of job nodes after the resume. If no event to change the job flow rate occurs from a pause to the resume, the job flow rate is set to be the job flow rate of a process node representing the pause coupled through a link. If an event to change the job flow rate occurs from the pause to the resume, the job flow rate after the change is set. For example, since kilometrage is defined as the job flow rate to measure the timing of fueling, and the fueling occurs from the pause to the resume, the job flow rate at the resume may be set to be zero, for example.

### 4. When the process node represents the end of the job procedure:

The job flow rate represents the sum of job flow rates from the start to the end of the job procedure. However, if the job procedure includes a pause or a resume, the job flow rate represents the sum of job flow rates from the last resume to the end. The job flow rate is calculated by adding the job flow rate at the process node representing the start (or resume) of the job procedure and the sum of job flow rates of all job nodes included between the start (or resume) and the end of the job procedure.

Next, the allocation flow rate is described.

### 1. When the process node represents the start of the job procedure:

The allocation flow rate represents an initial value for calculating the sum of allocation flow rates of the resource allocation link coupled with each job node included in the job procedure. For example, in order to calculate a job cost when the present process ends together with a job cost reflecting the resource unit price of the previous process managed by another plan, the job cost reflecting the resource unit price of the previous process is set as the initial value.

### 2. When the process node represents the pause of the job procedure:

The allocation flow rate represents the sum of allocation flow rates from the start to the pause of the job procedure. However, if the job procedure includes a pause or a resume, the allocation flow rate represents the sum of allocation flow rates from the last resume to the pause. The allocation flow rate is calculated by adding the allocation flow rate of a process node representing the start (or resume) of the job procedure, and the sum of the allocation flow rates of resource allocation links coupled with all job nodes included between the start (or resume) and the pause of the job procedure.

### 3. When the process node represents the resume of the job procedure:

The allocation flow rate represents an initial value for calculating the sum of allocation flow rates of job nodes after the resume. If no event to change the allocation flow rate has occurred from a pause to the resume, the allocation flow rate is set to the allocation flow rate of a process node representing the pause coupled by a link. If an event to change the allocation flow rate occurs from the pause to the resume, the allocation flow rate after the change is set as the initial value.

### 4. When the process node represents the end of the job procedure:

The allocation flow rate represents the sum of allocation flow rates from the start to the end of the job procedure. However, if the job procedure includes a pause or a resume, the allocation flow rate represents the sum of allocation flow rates from the last resume to the end. The allocation flow rate is calculated by adding the allocation flow rate of a process node representing the start (or resume) of the job procedure, and the sum of the allocation flow rates of resource allocation links coupled with all job nodes included between the start (or resume) and the end of the job procedure.

In this plan coordination model, association between each job procedure and a flow from the start to the end of the corresponding process is represented by a link (hereinafter referred to as an inter-process job link) coupling the job layer 402 and the process layer 403. Specifically, a link is generated by setting a link source to be a process node representing the start of the job procedure, and a link destination to be a job node representing a job earliest in an execution order among jobs included in the job procedure. Another link is generated by setting a link source to be a job node representing a job latest in the execution order among the jobs included in the job procedure, and a link destination to be a process node representing the end of the job procedure. If the job procedure includes a pause, another link is generated by setting a link source to be a job node representing a job right before the pause, and a link destination to be a process node representing the pause of the job procedure. If the job procedure includes a resume, another link is generated by setting a link source to be a process node representing the resume of the job procedure, and a link destination to be a job node representing a job right after the resume. In the example illustrated in Fig. 4, a flow represented by the process nodes 408 and 409 represents a job procedure that starts at the job node 405 and ends at the job node 407.

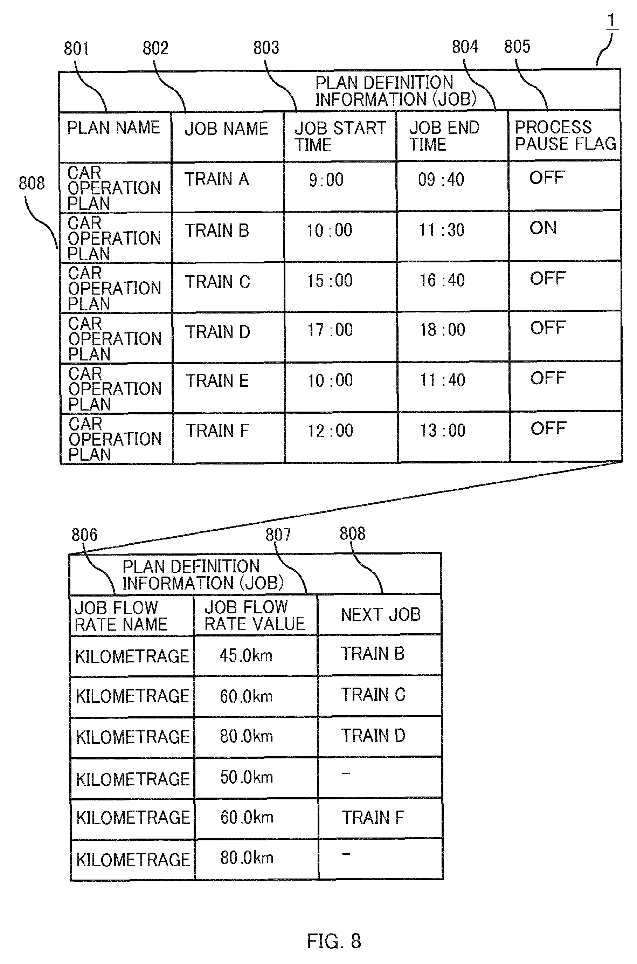

In the present embodiment, the basic configuration of a plan coordination model is the configuration that is generated for each plan by the plan coordination system 1000 as described above and includes the three layers of the resource layer 401, the job layer 402, and the process layer 403. Information stored by the resource layer 401 and the job layer 402 is published only to the plan generating apparatus 1300 storing the plan, but is not published to other plan generating apparatuses 1300. Information stored by the process layer 403 can be published to all plan generating apparatuses 1300. In other words, the information stored by the process layer 403 corresponds to public data. Information that can be published by the process layer 403 is described in detail with reference to Figs. 8 to 12.

A coordination between plans is represented by a link that couples process nodes of plan coordination models representing the plans. Specifically, a link is generated by setting a link source to be a process node belonging to a plan that stores information coordinated between the plans, and a link destination to be a process nodes belonging to a plan that receives the coordinated information.

The following describes an exemplary configuration of information handled by the plan coordination system 1000 according to the present embodiment. Among the information, the plan definition information 1 defines an individual plan as a coordination destination and includes job information on a job of a planning target, resource information, allocation relation information on allocation of a resource to a job, and process information in accordance with the configuration of a plan coordination model. The plan definition information is described in detail with reference to Figs. 8 to 12.

The plan coordination model state information 2 sequentially stores state information of the plan coordination model for each change of data or each change of a plan coordination model reflecting a plan generation result of each plan generating apparatus 1300. Specifically, the plan coordination model state information 2 includes node state information, link state information in the basic configuration, plan coordination link state information, and evaluation index information. The following describes each kind of information in detail.

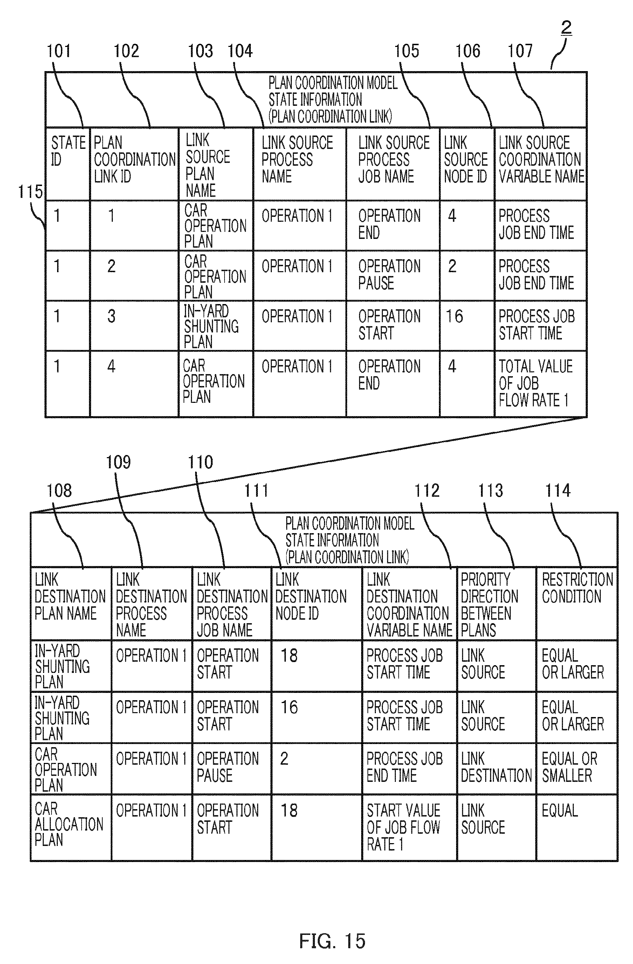

The node state information includes components such as an identification number for uniquely identifying state information, a node name or an identification number for uniquely identifying a node, a node type representing the type of the node, which is a job node, a resource node, or a process node, and plan definition information defining the node. The link state information in the basic configuration includes the identification number for uniquely identifying state information described above, identification information for uniquely identifying a link, an identification number of a link source node, and an identification number of a link destination node. The plan coordination link state information is described in detail with reference to Fig. 15. The index evaluation information includes an identification number for uniquely identifying state information, a calculation formula for calculating the evaluation index for the entire plan, and a value calculated using the calculation formula. The calculation formula for calculating the evaluation index is described with reference to Fig. 17.

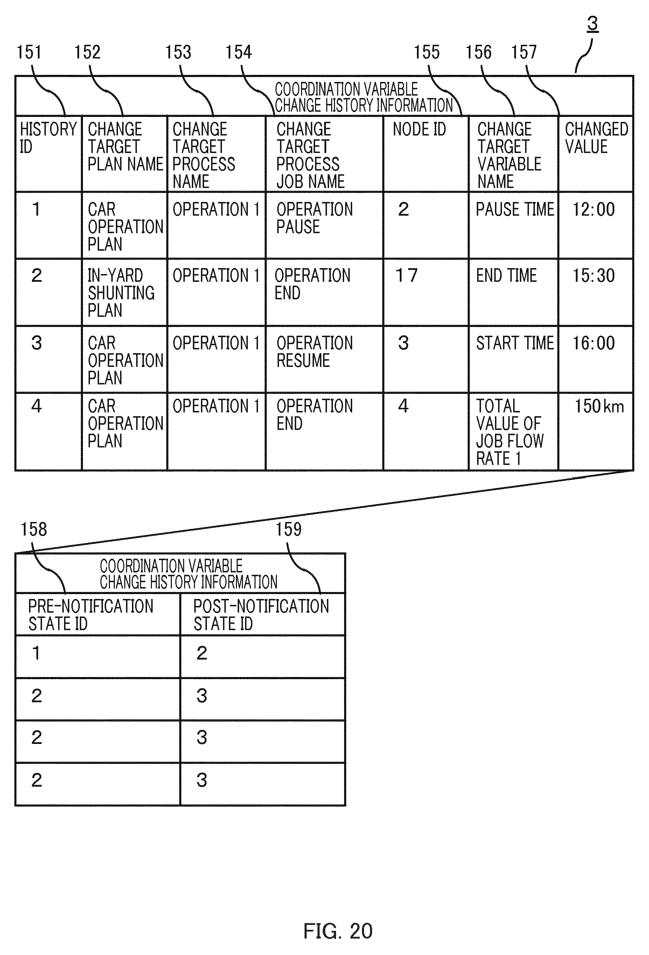

The coordination variable change history information 3 stored in the storage device 1100 by the plan coordination system 1000 is a table storing information on a component of which value has changed among components of the process node along with a change of data or a change of a plan coordination model reflecting a plan generation result of each plan generating apparatus 1300. The coordination variable change history information 3 is described in detail with reference to Fig. 20.

The plan generating apparatus state information 4 is a table storing state information on the plan generating apparatus 1300 that generates a plan. Specifically, the plan generating apparatus state information 4 includes an identification number for uniquely identifying the plan generating apparatus 1300, and a system state of the plan generating apparatus 1300 identified by the identification number. The system state of the plan generating apparatus 1300 is any one of: plan generation completed; and generating plan.

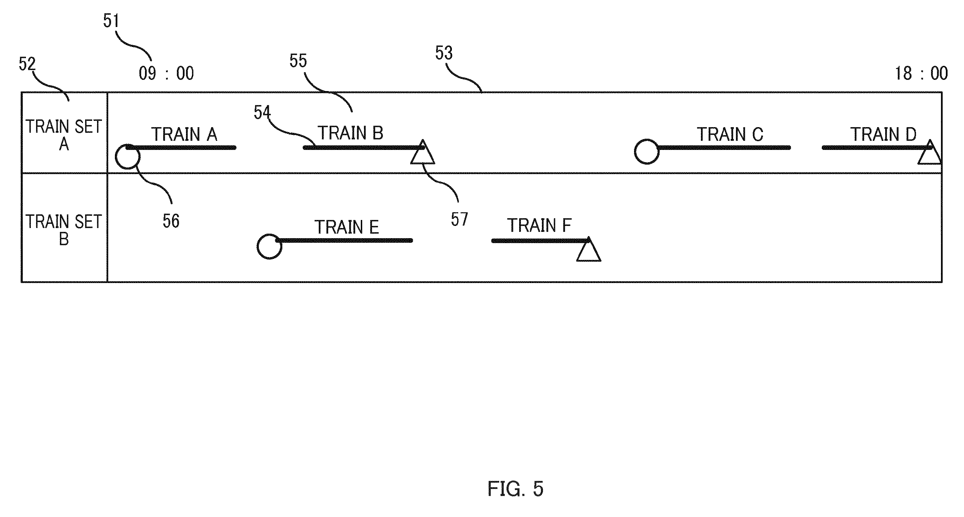

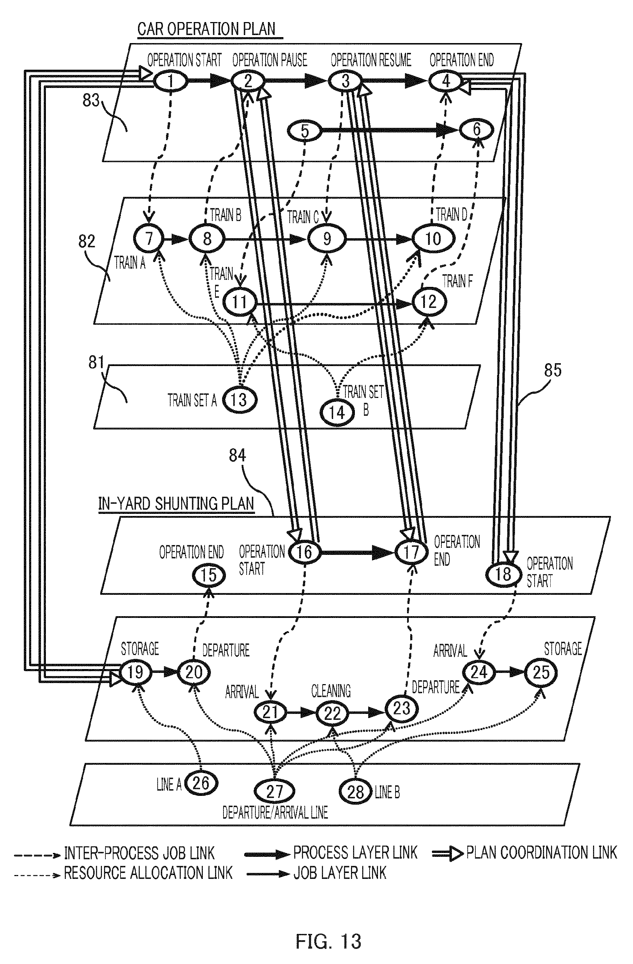

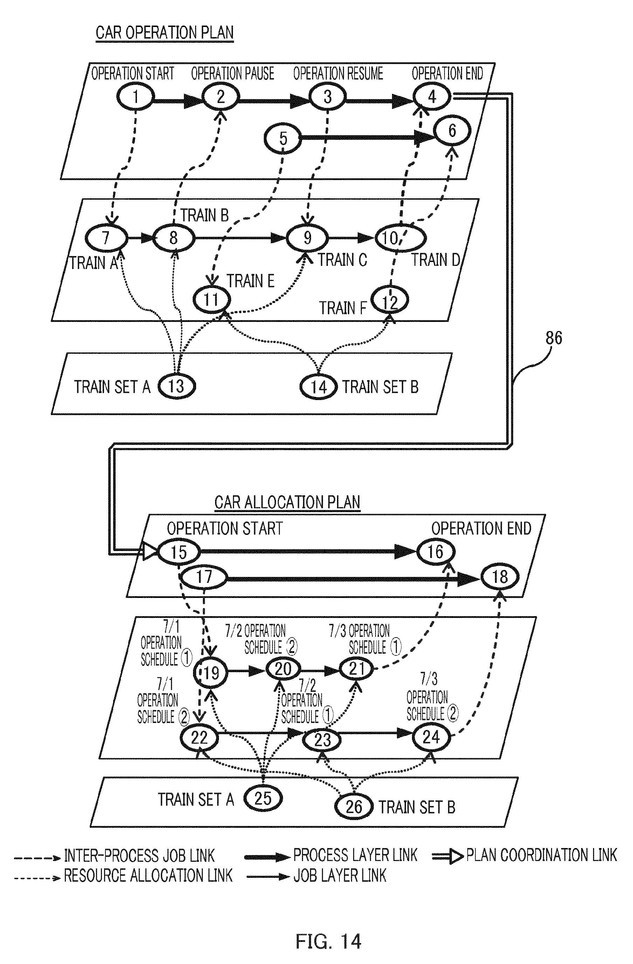

The following describes a specific example of a plan as a processing target of the plan coordination system 1000 according to the present embodiment with reference to Figs. 5 to 7. A specific example of the plan definition information 1 will be described with reference to Figs. 8 to 12. A specific example of a plan coordination model will be described with reference to Figs. 13 and 14. Details and the like of a processing procedure at each processing part of the plan coordination system 1000 will be described with reference to Figs. 16 to 19. In the present embodiment, three plans of a car operation plan, an in-yard shunting plan, and a car allocation plan relating to railway car management are assumed as specific examples of a plan as a coordination management target of the plan coordination system 1000.

Fig. 5 illustrates an example of the car operation plan among these plans. Hereinafter, a "train" refers to a travel from a starting station to a terminal station, and a "train set" refers to a set of a plurality of cars allocated to a train. The car operation plan specifies allocation of a train set to a train. As illustrated in the drawing, the drawing illustrating the car operation plan includes a horizontal axis 51, a train set name 52, and allocation information 53. The horizontal axis 51 represents time. The train set name 52 represents a name for uniquely identifying a train set. The allocation information 53 represents allocation of a train to a train set indicated by the train set 52. One cross bar (a cross bar 54, for example) represents each allocated train and a train name (a train name 55, for example) is displayed close to the cross bar.

A symbol such as a symbol 56 represented by "○" represents a timing (hereinafter referred to as departure) when a train set comes out of a rail yard. For example, the symbol 56 represents departure of a "TRAIN SET A" from the rail yard along with departure of a "TRAIN A". A symbol such as a symbol 57 represented by "Δ" represents a timing (hereinafter referred to as arrival) when a train set enters into the rail yard. For example, the symbol 57 represents arrival of the "TRAIN SET A" at the rail yard after a "TRAIN B" has arrived at a station. Thus, the car operation plan illustrated in Fig. 5, for example, is a plan in which the "TRAIN SET A" travels as the "TRAIN A", travels as the "TRAIN B", is temporarily housed in the rail yard, is taken out of the rail yard again, travels as a "TRAIN C" and a "TRAIN D", and then is housed in the rail yard.

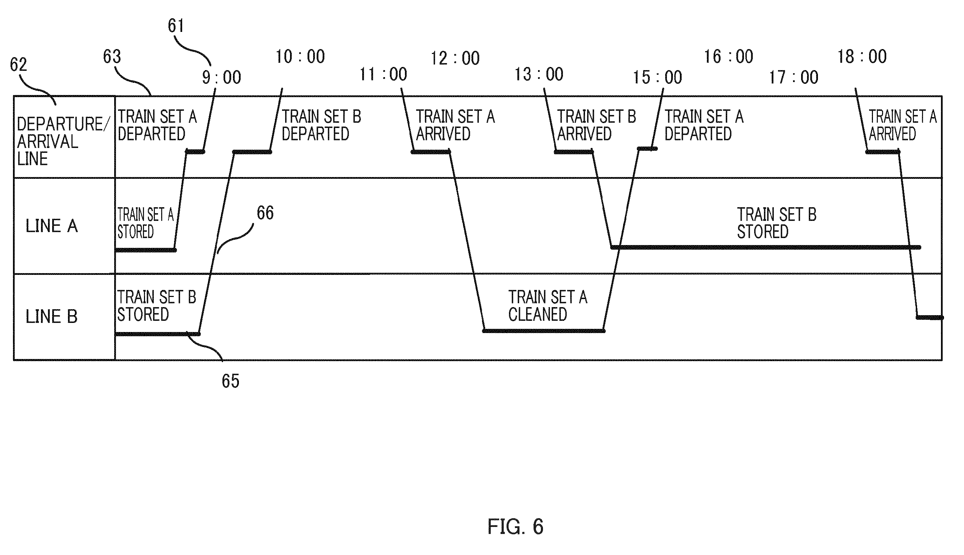

Fig. 6 illustrates a specific example of the in-yard shunting plan. The in-yard shunting plan is related to a rail yard that performs car maintenance including storage, cleaning, and inspection of a car, and specifies which storage track (hereinafter referred to as a line) laid in the rail yard is to be allocated to a job of storing a train set. A drawing illustrating this plan includes a horizontal axis 61, a line name 62, and an allocation plan 63.

Among the components, the horizontal axis 61 represents time. The line name 62 represents a name for uniquely identifying a line. The allocation plan 63 represents allocation of a storage job to a line indicated by the line name 62. One cross bar (a cross bar 65, for example) represents an allocated storage job, and a diagonal line (a line segment 66, for example) represents movement between lines.

In the in-yard shunting plan illustrated in Fig. 6, the "TRAIN SET A" departs from a "LINE A" of the rail yard through a departure/arrival line about "9:00", stored on a "LINE B" through the departure/arrival line about "11:00" where cleaning is provided, and then departs through the departure/arrival line about "15:00". Thereafter, the "TRAIN SET A" is stored on the "LINE B" through the departure/arrival line about "18:00" according to the plan. In terms of line allocation, the "LINE A" stores the "TRAIN SET A" until "9:00" and stores a "TRAIN SET B" from about "15:00" until the end of the day according to the plan.

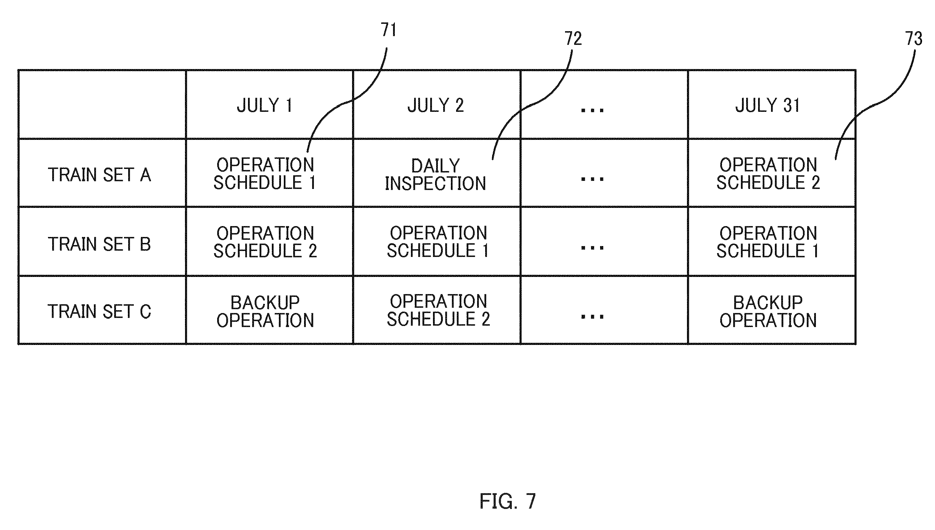

Fig. 7 illustrates a specific example of the car allocation plan. The car allocation plan is a plan over a long term such as half month or one month, and specifies which train set is allocated to an operation schedule indicating a travel schedule on each day, an inspection job, an operation (referred to as a shift or a backup operation) of storing as a backup train set all day. A period to inspect a railway car is determined based on the number of kilometrages and the number of days elapsed from the day of a previous inspection, and the car allocation plan performs the inspection according to this period and allocates train sets to travel schedules. The operation schedule represents a group of trains allocated to one train set as previously illustrated in Fig. 5, and indicates a predetermined group of trains as a basic example. In a drawing illustrating this plan, a column represents a date, a row represents the train set name for uniquely identifying a train set, and a cell at which a row and a column intersect with each other indicates a job allocated to a train set indicated by the row on a date indicated by the column. For example, according to the car allocation plan illustrated in Fig. 7, for the "TRAIN SET A", an "OPERATION SCHEDULE 1" (cell 71) is allocated on "JULY 1", "DAILY INSPECTION" is allocated (cell 72) on "JULY 2", and "OPERATION SCHEDULE 2" (cell 73) is allocated on "JULY 31".

The following is clear from the specific examples: the car operation plan and the in-yard shunting plan need coordination of times of departure and arrival, and the car operation plan and the car allocation plan need coordination in accordance with information on the kilometrage of a railway car to take into consideration the timing of an inspection period.

The following describes a specific exemplary configuration of the plan definition information 1 used in various kinds of processing such as generation of a plan coordination model by the plan coordination system 1000. Figs. 8 to 12 illustrate exemplary definitions related to the car operation plan illustrated in Fig. 5 as the structure of a record of the plan definition information 1 and exemplary data belonging to the record. The plan definition information 1 includes job information on a job, resource information on a resource, allocation relation information on allocation of the resource to the job, and process information.

Fig. 8 illustrates the structure of a record of the job information among these pieces of information and exemplary data stored in the record. In the record of the job information illustrated in Fig. 8, a plan name 801 stores a plan name for uniquely identifying a plan as a definition target. A job name 802 stores an operation name for uniquely identifying a job as a planning target in a plan identified by the plan name 801.

A job start time 803 stores the job start time of the job identified by the plan name 801 and the job name 802. A job end time 804 stores the job end time of the job identified by the plan name 801 and the job name 802.

A process pause flag 805 indicates whether to temporarily pause the present job procedure after the end of the job identified by the plan name 801 and the job name 802. When being set to "ON", the process pause flag 805 indicates a pause of the job procedure after the end of the job identified by the job name 802, and when being set to "OFF", the process pause flag 805 indicates continuation of the job procedure without a pause after the end of the job. For example, in the exemplary car operation plan illustrated in Fig. 5, a train set allocated to the "TRAIN B" arrives at the rail yard after the travel of the "TRAIN B". Thus, a process pause flag of a record 808 indicating the "TRAIN B" is set to "ON". In a plan in other fields, events represented by such a "pause" include a break of an operator and switching of machines.

In the record of the job information, the job flow rate name 806 is a job flow rate name for uniquely identifying the type of the job flow rate, which is stored in a job node indicating the job identified by the plan name 801 and the job name 802. A job flow rate value 807 is the value of a job flow rate identified by the job flow rate name 806 among job flow rates stored in a job node indicating the job identified by the plan name 801 and the job name 802. The job flow rate name 806 and the job flow rate value 807 are defined in a pair in the number of job flow rates to be defined. A following job 808 is a job name for identifying a job performed following the job identified by the plan name 801 and the job name 802 on the job procedure.

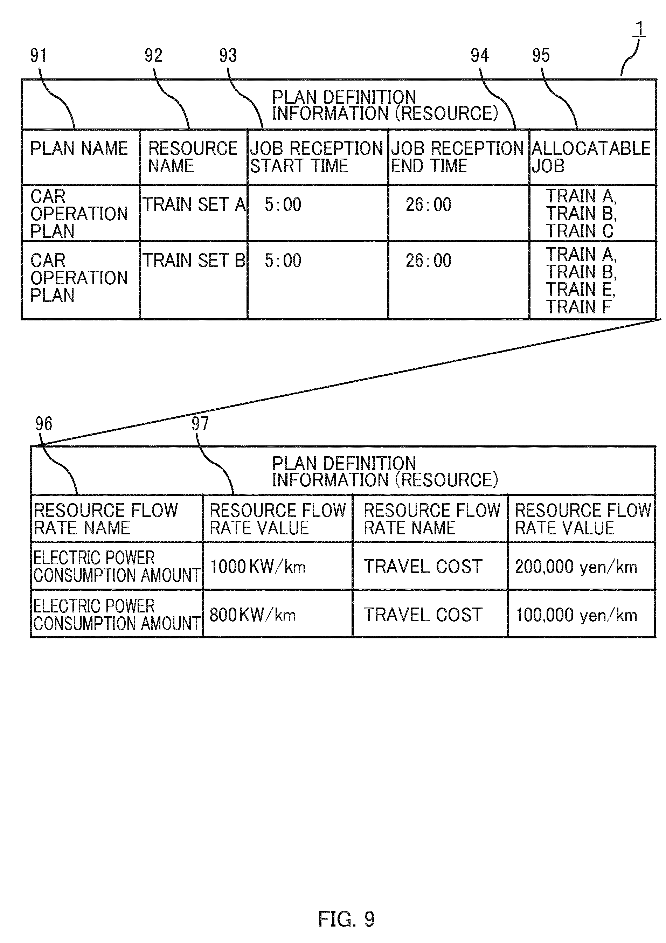

Fig. 9 illustrates the structure of a record of the resource information and exemplary data stored in the record. In this resource information, a plan name 91 is a plan name for uniquely identifying a plan as a definition target. A resource name 92 is a resource name for uniquely identifying a resource as a planning target in the plan identified by the plan name 91. A job reception start time 93 is a time at which the resource identified by the plan name 91 and the resource name 92 starts job reception. A job reception end time 94 is a time at which the resource identified by the plan name 91 and the resource name 92 ends the job reception. An allocatable job 95 is a job allocatable to the resource identified by the plan name 91 and the resource name 92.

In the above-described record of the resource information, the resource flow rate name 96 is a resource flow rate stored in a resource node indicating the resource identified by the plan name 91 and the resource name 92. As described with reference to Fig. 4, this resource flow rate indicates the degree of influence of an allocated resource when the process layer 403 handles the sum of values for jobs included in a job procedure and the values change depending on the allocated resource. In the example illustrated in Fig. 9, for "electric power consumption amount" and "travel cost", values in the unit of kilometrage when the "TRAIN SET A" is allocated and values in the unit of kilometrage when the "TRAIN SET B" is allocated are defined.

The resource flow rate value 97 is the value of a resource flow rate identified by the resource flow rate name 96 among resource flow rates stored in a resource node indicating the resource identified by the plan name 91 and the resource name 92. The resource flow rate name 96 and the resource flow rate value 97 are defined in a pair in the number of resource flow rates to be defined.

Fig. 10 illustrates the structure of a record of the allocation relation information on allocation of a resource to a job and exemplary data stored in the record. In the record of the allocation relation information, a plan name 101 is a plan name for uniquely identifying a plan as a definition target. A resource name 102 is a resource name for uniquely identifying a resource as a planning target in a plan identified by the plan name 101. The resource identified by the plan name 101 and the resource name 102 is identical to the above-described resource identified by the plan name 91 and the resource name 92.

An allocated job number 103 is the number of jobs allocated to the resource identified by the resource name 102 in the plan identified by the plan name 101. An allocated job name 104 is the job name of a job allocated to the resource identified by the plan name 101 and the resource name 102 in the plan identified by the plan name 101. A job identified by a stored job name and the plan name 101 is identical to the job identified by the plan name 801 and the job name 802.

The allocation flow rate name 105 is the name of an allocation flow rate stored in a resource allocation link coupling the resource identified by the plan name 101 and the resource name 102 and a job identified by one of the job names defined by the allocated job name 104 and the plan name 101.

The allocation flow rate calculation formula 106 is a calculation formula of an allocation flow rate identified by the allocation flow rate name 105 among allocation flow rates stored in the resource allocation link coupling the resource identified by the plan name 101 and the resource name 102 and the job identified by one of the job names defined by the allocated job name 104 and the plan name 101. In the example illustrated in Fig. 10, "electric power consumption amount" is defined as one allocation flow rate and defined as "the resource flow rate "electric power consumption amount" × the job flow rate "kilometrage". This calculation formula indicates that the product of value (1) and value (2) obtained by the following method is set as the allocation flow rate of the resource allocation link.
Value (1): the resource flow rate value 97 paired with the resource flow rate name 96 obtained, by using "electric power consumption amount" as a search key, from a record of plan definition information (resource information) obtained by searching the plan definition information 1 using the plan name 101 and the resource name 102 as search keys.
Value (2): the job flow rate value 807 paired with the job flow rate name 806 obtained, by using "kilometrage" as a search key, from a record of plan definition information (job information) obtained by searching the plan definition information 1 by using the plan name 101 and one job name defined by the allocated job name 104 as search keys.

The allocation flow rate name 105 and the allocation flow rate calculation formula 106 are defined in a pair in the number of allocation flow rates to be defined.

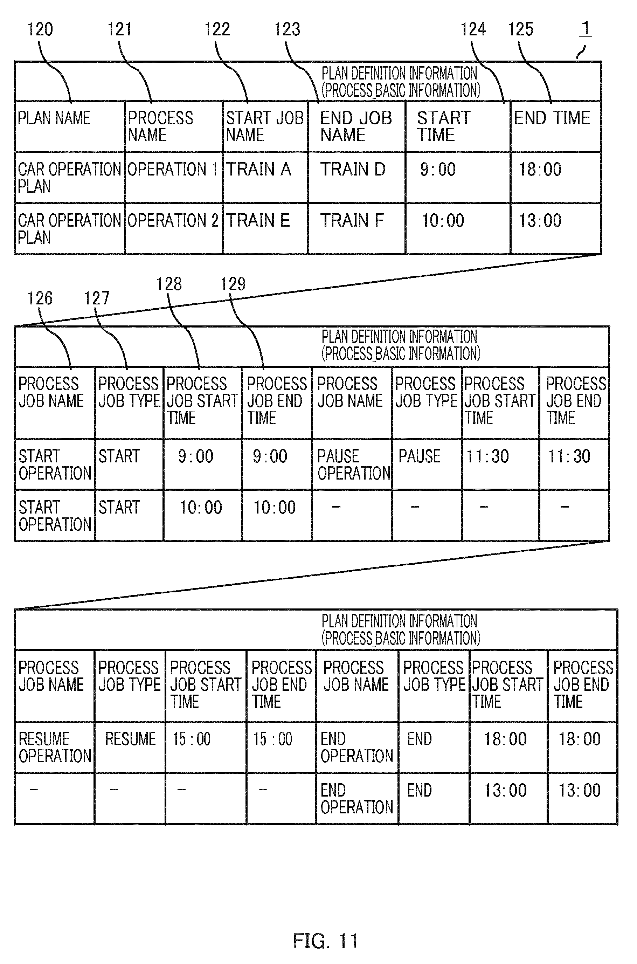

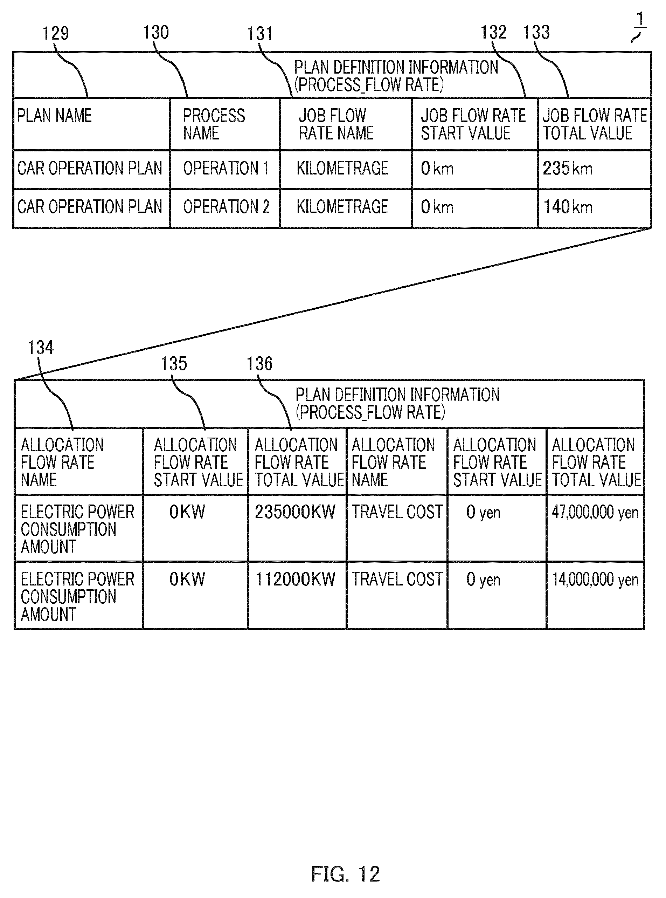

Among the plan definition information 1, the following describes the structure of a record of the process information and exemplary data stored in the record with reference to Figs. 11 and 12. The process information is categorized into a basic part and a flow rate part. Fig. 11 illustrates the basic part of the process information. In a record of the basic part of the process information, a plan name 120 is a plan name for uniquely identifying a plan as a definition target. A process name 121 is the name of one job procedure planned in the plan identified by the plan name 120.

A start job name 122 is the name of the start job of a job procedure represented by a process identified by the plan name 120 and the process name 121. A job identified by the plan name 120 and the start job name 122 is identical to the job identified by the plan name 801 and the job name 802.

An end job name 123 is the name of the end job of the job procedure represented by the process identified by the plan name 120 and the process name 121. A job identified by the plan name 120 and the end job name 122 is identical to the job identified by the plan name 801 and the job name 802.

A start time 124 is the start time of the job procedure represented by the process identified by the plan name 120 and the process name 121. An end time 125 is the end time of the job procedure represented by the process identified by the plan name 120 and the process name 121.

A process job name 126 is the name of a process job included in the flow of the process identified by the plan name 120 and the process name 121. This process job indicates any one of the start, pause, resume, and end of a job procedure.

A process job type 127 is the type of a process job identified by the plan name 120, the process name 121, and the process job name 126. The type is any one of the start, pause, resume, and end of a job procedure. A process job start time 128 is the start time of the process job identified by the plan name 120, the process name 121, and the process job name 126. A process job end time 129 is the end time of the process job identified by the plan name 120, the process name 121, and the process job name 126. The process job name 126 to the process job end time 129 are defined in the number of process jobs included in the flow of the process identified by the plan name 120 and the process name 121.

A specific example of the flow rate part of the above-described process information is illustrated in Fig. 12. In a record of the flow rate part of the process information, a plan name 130 is a plan name for uniquely identifying a plan as a definition target. A process name 131 is the name of one job procedure planned in the plan identified by the plan name 130.

The job flow rate name 131 is a name indicating one of job flow rates of a job procedure represented by a process identified by the plan name 130 and the process name 131. A job flow rate start value 133 is a value of the job flow rate defined by the job flow rate name 131 in the process identified by the plan name 130 and the process name 131, at a process start time.

A job flow rate total value 134 is the sum of the job flow rate defined by the job flow rate name 131 among job flow rates of jobs included in the job procedure represented by the process identified by the plan name 130 and the process name 131. The job flow rate total value 134 may be set in advance by reading a definition as information or may be calculated by the plan coordination system 1000 following the procedure described in "When the process node represents the end of the job procedure" in the definition of the job flow rate described with reference to Fig. 4.

In the record of the flow rate part of the process information, the allocation flow rate name 135 indicates one of allocation flow rates of the job procedure represented by the process identified by the plan name 130 and the process name 131. The allocation flow rate start value 136 is the value of an allocation flow rate defined by the allocation flow rate name 135 in the process identified by the plan name 130 and the process name 131, at a process start time.

The allocation flow rate total value 137 is the sum of allocation flow rates defined by the allocation flow rate name 135 among allocation flow rates of jobs included in the job procedure represented by the process identified by the plan name 130 and the process name 131. The allocation flow rate total value 137 may be set in advance by reading a definition as information or may be calculated by the plan coordination system 1000 following the procedure described in "When the process node represents the end of the job procedure" in the definition of the allocation flow rate described with reference to Fig. 4.

The job flow rate name 131 to the job flow rate total value 134 are each defined in the number of the names of job flow rates of the job procedure represented by the process identified by the plan name 130 and the process name 131. The allocation flow rate name 135 to the allocation flow rate total value 137 are each defined in the number of the names of allocation flow rates of the job procedure represented by the process identified by the plan name 130 and the process name 131.

Figs. 13 and 14 each illustrate a specific example of a plan coordination model based on the configuration of coordination between the car operation plan of which exemplary basic configuration is illustrated in Fig. 5 and other plans. The number of each node in Figs. 13 and 14 indicates an identification number of the node. The following first describes a procedure, in the plan coordination system 1000, of generating a plan coordination model based on the plan definition information 1 illustrated in Figs. 8 to 12 described above. The car operation plan illustrated in Fig. 13 includes a resource layer 81, a job layer 82, and a process layer 83. The plan coordination system 1000 sets, based on data of the plan definition information 1, the resource nodes 13 and 14 on the resource layer 81 to be "TRAIN SET", job nodes 7 to 12 on the job layer 82 to be "TRAIN", and process nodes 1 to 6 on the process layer 83 to be the start of a operation schedule for one "TRAIN SET", arriving and departing of the "TRAIN SET" at and from the rail yard, and the end of the operation schedule.

In this case, the plan coordination system 1000 generates a resource allocation link between the resource layer 81 and the job layer 82 based on the allocation relation information of the plan definition information 1 illustrated in Fig. 10. Specifically, the plan coordination system 1000 generates the resource allocation link by setting a link source to be a resource node representing the resource name 102, and a link destination to be a job node representing one job defined by the allocated job name 104.

For example, since the "TRAIN A", the "TRAIN B", the "TRAIN C", and the "TRAIN D" are allocated to the "TRAIN SET A" as indicated by the allocation relation information included in the plan definition information 1 in Fig. 10, the plan coordination system 1000 reads this information into the storage device 1100, and generates a link having a link source that is a node ID 13 as a resource node representing the "TRAIN SET A", and a link destination that is each of node IDs 7 to 10 of job nodes representing the trains. Such information generated by the plan coordination system 1000 for a plan coordination model is stored in the plan coordination model state information 2 (Fig. 15), which is true also in the following description. Similarly, the plan coordination system 1000 generates a link between a resource node representing the "TRAIN SET B" and a job node representing a job allocated by the allocation relation information included in the plan definition information 1 in Fig. 10.

The plan coordination system 1000 generates an inter-process job link between the job layer 82 and the process layer 83 based on the basic part of the process information of the plan definition information 1 illustrated in Fig. 11, as described below. The following describes specific generation procedures 1 to 4.

At the procedure 1, the plan coordination system 1000 generates an inter-process job link between a process node representing a start and a job node. Specifically, the plan coordination system 1000 generates, for one process defined by the basic part of the process information of the plan definition information 1, an inter-process job link having a link source that is a process node representing the start of the process, and a link destination that is a job node representing a job identified by using the plan name 120 and the start job name 122 as search keys. For example, as indicated by the basic part of the process information of the plan definition information 1 in Fig. 11, a start job is the "TRAIN A" in an "OPERATION 1". Accordingly, the plan coordination system 1000 generates an inter-process job link having a link source that is the node 1 of a process node representing the start of the "OPERATION 1", and a link destination that is the node ID 7 of a job node representing the "TRAIN A".

Subsequently at the procedure 2, the plan coordination system 1000 generates an inter-process job link between a process node representing a pause and a job node. Specifically, for one process defined by the basic part of the process information of the plan definition information 1, the plan coordination system 1000 sequentially follows job layer links on the job layer 82 from a job node representing the start job of the process, and acquires a job node (node A) for which the pause job flag 805 is "ON". The plan coordination system 1000 also follows a process layer link from a process node representing the start of the process, and acquires a process node (node B) for which the process job type 127 is "pause". The plan coordination system 1000 generates an inter-process job link having a link source that is the node A and a link destination that is the node B. The plan coordination system 1000 repeats the same processing from the node A and the node B until they reach the last job node included in a job procedure and a process node for which the process job type 127 is "end", respectively.

In the example of the basic part of the process information of the plan definition information 1 in Fig. 11, for an inter-process job link between a process node included in a process indicating the "OPERATION 1" and a job node on the job layer 82, the plan coordination system 1000 sequentially follows job layer links on the job layer 82 from a job node representing the "TRAIN A" as the start job of the process, and acquires a job node (node A2) for which the process pause flag 805 is "ON". The plan coordination system 1000 also follows a process layer link from a process node representing the start of the "OPERATION 1" and acquires a process node (node B2) for which the process job type 127 is "pause" . In this manner, the plan coordination system 1000 generates an inter-process job link having a link source that is the node A2 and a link destination that is the node B2.

Subsequently at the procedure 3, the plan coordination system 1000 generates an inter-process job link between a process node representing a resume and a job node. Specifically, for one process defined by the basic part of the process information of the plan definition information 1, the plan coordination system 1000 sequentially follows job layer links on the job layer 82 from a job node representing the start job of the process, and acquires a job (node C) next to a job node for which the pause job flag 805 is "ON". The plan coordination system 1000 also follows a process layer link from a process node representing the start of the process and acquires a process node (node D) for which the process job type 127 is "resume". Accordingly, the plan coordination system 1000 generates an inter-process job link having a link source that is the node D and a link destination that is the node C. The plan coordination system 1000 repeats the same processing from the node C and the node D until they reach the last job node included in a job procedure and a process node for which the process job type 127 is "end", respectively.

In the example of the basic part of the process information of the plan definition information 1 in Fig. 11, for an inter-process job link between a process node included in a process indicating the "OPERATION 1" and a job node on the job layer 82, the plan coordination system 1000 sequentially follows job layer links on the job layer 82 from a job node representing the "TRAIN A" as the start job of the process, and acquires a job (node C2) next to a job node for which the process pause flag 805 is "ON". The plan coordination system 1000 also follows a process layer link from a process node representing the start of the "OPERATION 1" and acquires a process node (node D2) for which the process job type 127 is "resume". In this manner, the plan coordination system 1000 generates an inter-process job link having a link source that is the node D2 and a link destination that is the node C2.

Subsequently at the procedure 4, the plan coordination system 1000 generates an inter-process job link between a process node representing an end and a job node. Specifically, for one process defined by the basic part of the process information of the plan definition information 1, the plan coordination system 1000 generates an inter-process job link having a link source that is a job node representing a job identified by using the plan name 120 and the end job name 123 as search keys, and a link destination that is a process node representing the end of the process. In the example of the basic part of the process information of the plan definition information 1 in Fig. 11, an end job is the "TRAIN D" in the "OPERATION 1". In this manner, the plan coordination system 1000 generates an inter-process job link having a link destination that is the node ID 10 of a job node representing the "TRAIN D", and a link destination that is the node 4 of a process node representing the end of the "OPERATION 1".

The following describes generation of a plan coordination link coupling plans represented in the basic configuration. This plan coordination link is generated between process nodes communicating values between plans. For example, as described with reference to Fig. 5, the car operation plan and the in-yard shunting plan need coordination of departure time and arrival time from and at the rail yard. Thus, as illustrated in plan coordination rings 84 and 85 in Fig. 13, the plan coordination system 1000 generates a plan coordination link having a link source and a link destination that are a process node representing the "pause" or an "end" of the job procedure, which means arrival in the car operation plan, and a process node representing the "start" of the job procedure, which indicates arrival in the in-yard shunting plan.

Similarly, the plan coordination system 1000 generates a plan coordination link coupling the "start" or "resume" of the job procedure, which means departure in the car operation plan, and the "end" thereof which indicates departure in the in-yard shunting plan.

Similarly, as described with reference to Fig. 5, the car operation plan and the car allocation plan need coordination of information on kilometrage so as to be consistent in terms of the inspection period. Thus, as illustrated with a plan coordination link 86 in Fig. 14, the plan coordination system 1000 generates a plan coordination link having a link source that is a process node representing an "end" of a job procedure which means the end of an operation schedule in the car operation plan, and a link destination that is a process node representing a "start" indicating the start of a car allocation plan of the next day or later in the car allocation plan. Such a plan coordination link has a coordination variable and a restriction condition as attributes. The coordination variable represents a component of each of process nodes communicating values between plans, and is defined for the link source and the link destination of a plan coordination link. The restriction condition defines a magnitude relation or equality between the value of the coordination variable at the link source and the value of plan coordination at the link destination.

An exemplary plan coordination link is described with reference to Fig. 15. Fig. 15 illustrates the structure of a record of the plan coordination model state information 2 and an exemplary value belonging to the record. The plan coordination model state information 2 is information storing the state of a plan coordination model at a time.

In the record of the plan coordination model state information 2, a state ID 101 is an identification number for uniquely identifying a stored state. A plan coordination link ID 102 is an identification number for uniquely identifying one of plan coordination links included in a plan coordination model identified by the state ID 101. A link source plan name 103 is a name for identifying a plan including a process node as the link source of a plan coordination link identified by the state ID 101 and the plan coordination link ID 102.

A link source process name 104 is the name of a process including the process node as the link source of the plan coordination link identified by the state ID 101 and the plan coordination link ID 102. A link source process job name 105 is the name of a process job represented by the process node as the link source of the plan coordination link identified by the state ID 101 and the plan coordination link ID 102.

A link source node ID 106 is a node ID for uniquely identifying the process node as the link source of the plan coordination link identified by the state ID 101 and the plan coordination link ID 102. The node identified by this node ID is identical to a node identified by a node ID defined by the node information of the plan coordination model state information 2.

A link source coordination variable name 107 is a name for identifying a component communicating values with a component of a process node as a link destination identified by the plan coordination link ID 102, among components of the process node as the link source of the plan coordination link identified by the state ID 101 and the plan coordination link ID 102.

A link destination plan name 108 is a name for identifying a plan including a process node as the link destination of the plan coordination link identified by the state ID 101 and the plan coordination link ID 102. A link destination process name 109 is the name of a process including the process node as the link destination of the plan coordination link identified by the state ID 101 and the plan coordination link ID 102. A link destination process job name 110 is the name of a process job represented by the process node as the link destination of the plan coordination link identified by the state ID 101 and the plan coordination link ID 102.

A link destination node ID 111 is a node ID for uniquely identifying the process node as the link destination of the plan coordination link identified by the state ID 101 and the plan coordination link ID 102. The node identified by this node ID is identical to a node identified by a node ID defined by the node information of the plan coordination model state information 2.

A link destination coordination variable name 112 is a name for identifying a component communicating values with a component of a process node identified by the link source node ID 106, among components of the process node as the link destination of the plan coordination link identified by the state ID 101 and the plan coordination link ID 102.

A priority direction between plans 113 is a priority direction of communicating values between a process node identified by the link source node ID 106 and a process node identified by the link destination node ID 111. In both coordinated plans, when a change of the value of a component identified by the link source coordination variable name 107 and a change of the value of a component identified by the link destination coordination variable name 112 coincide with each other, the plan coordination system 1000 selects one of the changes, which is specified by the priority direction.

A restriction condition 114 is a symbol or text indicating a magnitude relation or equality between the value of a component identified by the link source coordination variable name 107 and the value of a component identified by the link destination coordination variable name 112. This magnitude relation or an equality sign is an inequality sign of which left-hand side is a link source and right-hand side is a link destination.

In the record of the plan coordination model state information 2, for example, a record 115 represents the plan coordination link 85 in Fig. 13. The plan coordination link 85 is a link coupling the process node 4 representing arriving at the end of an operation schedule defined in the car operation plan and the process node 18 representing arrival at the in-yard shunting plan, and the time of the arrival of the in-yard shunting plan needs to be later than the end time of the operation schedule. Thus, the plan coordination system 1000 stores, in the restriction condition 114 in the record 115, "equal to or later than" indicating that the component "process job start time" of the process node 18 of the in-yard shunting plan as a link destination is equal to or later than the component "process job end time" of the process node 4 of the car operation plan as a link source.

The plan coordination system 1000 receives a node search condition from a user through an input screen such as an exemplary screen illustrated in Fig. 16, and generates a plan coordination link by coupling nodes matching the received search condition. The plan coordination system 1000 stores a coordination variable and a restriction condition received from the user through the input screen such as the exemplary screen illustrated in Fig. 16, as the attributes of a plan coordination link. Alternatively, such coordination variable and restriction condition may be defined by the user in advance and stored in the storage device 1100 of the plan coordination system 1000.

The following describes an exemplary input screen for information on a plan coordination link described above, in detail with reference to Fig. 16. Input values illustrated with the exemplary input screen in Fig. 16 are examples for setting the record 115 of the plan coordination model state information 2 in Fig. 15.

Specifically, the input screen includes "selection of plans coordinated with each other and definition of a priority order" 901, a coordination candidate variable 902, "definition of a variable of which value is to be coordinated" 903, and a set button 904. Among these, the "selection of coordinated plans and definition of a priority order" 901 includes a list box 905 that receives selection of a plan as a coordination source, a list box 906 that receives a priority order of plans between the plan as the coordination source and a plan as a coordination destination through selection of an inequality sign symbol, and a list box 907 that receives selection of the plan as the coordination destination. The plan coordination system 1000 displays plan names defined by the plan definition information 1 except for any duplication in the list boxes 905 and 907.

In the coordination candidate variable 902, the plan coordination system 1000 displays public information (in other words, process layer information) among information held by the plans selected by the "selection of coordinated plans and definition of a priority order" 901. The coordination candidate variable 902 includes texts 917 and 918 indicating the names of selected plans, and texts 908 and 909 displaying public information of the selected plans. The displayed public information is a component of the process information of the plan definition information 1.

The "definition of a variable of which value is to be coordinated" 903 includes a target-node search condition 910, target-node limitations 911 and 912, and a "target variable and restriction condition" 913.

Among these, the target-node search condition 910 is a condition for searching a variable of which value is to be coordinated between plans, and the plan coordination system 1000 receives specification from the user and generates a condition using a variable displayed in the coordination candidate variable 902. For example, in the example illustrated in Fig. 16, the process information of the plan definition information 1 is searched with such a condition that the component "process name" of the car operation plan and a value of the component "process name" of the in-yard shunting plan match each other and the component "process job name" of the car operation plan and a value of the component "process job name" of the in-yard shunting plan match each other. It is indicated that process nodes representing a process job acquirable as a search result are coordinated.

The target-node limitation (link source) 911 is a field for generating a condition for the plan coordination system 1000 to further narrow, upon reception of the specification from the user, process jobs acquirable under a condition indicated by the target-node search condition 910. In the example illustrated in Fig. 16, a coordination destination is set to be any process job of which value of the component "process job type" is "end" or "pause" among process jobs as link sources acquirable under the condition indicated by the target-node search condition 910. This condition sets a coordination destination to be a process node of "end" or "pause" that means arriving at the rail yard in the car operation plan.

The target-node limitation (link destination) 912 generates a condition for the plan coordination system 1000 to further narrow, upon reception of specification from the user, process jobs acquirable under a condition indicated by the target-node search condition 910. In the example illustrated in Fig. 16, a coordination destination is set to be any process job of which value of the component "process job type" is "start" among process jobs as link destinations acquirable under a condition indicated by the target-node search condition 910. This condition sets a coordination destination to be a process node of "start", which means arriving at the rail yard in the in-yard shunting plan.

For the "target variable and restriction condition" 913, upon reception of specification from the user, the plan coordination system 1000 generates components to be coordinated and a restriction condition between the components for a process job acquired with the target-node search condition 910, the target-node limitation (link source), and the target-node limitation (link destination) 912. Among these, a coordination variable (link source) 914 is a list box for the user to select any component to be coordinated from among components of a process job acquired by the target-node search condition 910 and the target-node limitation (link source) 911. A list box 915 is a list box for the user to select a restriction condition set between the values of components to be coordinated. A coordination variable (link destination) 916 is a list box for the user to select any component to be coordinated from among components of a process job as a link destination among process jobs acquired by the target-node search condition 910 and the target-node limitation (link destination) 912. The set button 904 is a button for the user to instruct generation of a plan coordination link.

Fig. 17 illustrates an exemplary input screen for the user to set any evaluation index of the entire plans to be coordinated. This input screen includes a candidate variable 917, "definition of the evaluation index of the entire plans" 918, and a set button 919.

Among these, the candidate variable 917 is a field in which the plan coordination system 1000 displays a variable candidate for defining an evaluation index. Specifically, the plan coordination system 1000 displays public information among information held by plans selected in the "selection of coordinated plans and definition of a priority order" 901. The candidate variable 917 includes texts 920 and 921 indicating the names of the selected plans, and texts 922 and 923 displaying public information of the selected plans. The public information displayed by the plan coordination system 1000 is a component of the process information of the plan definition information 1.

The "definition of the evaluation index of the entire plans" 918 includes an evaluation index element 924, an evaluation index 925, and an add button 926. Among these, the evaluation index element 924 includes a weight 927, a target plan 928, and a target variable 929. The weight 927 is a text box that receives an input of a weight for an evaluation index element generated by the user on this screen. The target plan 928 is a list box for the user to select a plan that holds a variable for defining an evaluation index element. The target variable 929 is a list box for the user to select a variable for defining an evaluation index element.

The evaluation function 925 includes a list box 930 for the user to select a method of calculating an evaluation function, and a text box 931 that displays an evaluation index element. Among these, the list box 930 holds in advance, for example, a list of information on "maximization" and "minimization" as the method of calculating an evaluation function. The text box 931 displays a calculation formula for the value of the evaluation function, which is generated by the plan coordination system 1000 by adding elements defined by the user through the evaluation index element 924. In contrast, in order to perform a subtraction, the user inputs a negative value to the weight 927 in the evaluation index element 924.

The add button 926 is a button for adding an element selected by the user though the evaluation index element 924 to the text box 931 of the evaluation index 925. The set button 919 is a button for the user to instruct generation of the evaluation index to the plan coordination system 1000.

The following describes step S205 "MONITOR DATA CHANGE" in the processing flow in Fig. 3 in detail with reference to Fig. 18. Specifically, the change monitoring part 1007 in the plan coordination system 1000 reads the plan definition information 1 into the memory 1001 from the storage device 1100 (step S301). This reading processing is periodically performed.

Subsequently, the change monitoring part 1007 in the plan coordination system 1000 determines whether the plan definition information 1 read at the above-described step S301 has changed from previously read information (step S302). Thus, the plan coordination system 1000 stores the plan definition information 1 read at each execution of the above-described step S301. As a result of the determination at this step S302, the change monitoring part 1007 executes step S303 if the plan definition information 1 has changed from the previously read information (S301: Yes), or executes step S301 if the plan definition information 1 has not changed (S301: No).

Subsequently, the change monitoring part 1007 registers the current state of a plan coordination model into the plan coordination model state information 2 (step S303). The change monitoring part 1007 updates a currently stored value of a component of each node of the plan coordination model to a value defined by the plan definition information 1 read at step S301 (step S304).

Next, the change monitoring part 1007 acquires a node of which value has changed before and after the update at the above-described step S304 (step S305), and subsequently performs steps S306 and S307. At step S306, the change monitoring part 1007 converts the node acquired at step S305 into definition data of a process, a job, or a resource represented by the node, transmits the converted definition data to the plan generating apparatus 1300 in charge of generation of a plan including this node, and instructs regeneration of a plan. At step S307, the change monitoring part 1007 updates coupling of each link (link between job nodes, link between process nodes, resource allocation link, or inter-process job link) and an allocation flow rate using the state of the node updated at step S304, and updates the values of job flow rate and the allocation flow rate of a process node. The procedures described with reference to Figs. 4 and 8 to 12 are used as the procedure of updating each link and the procedure of updating the process node.

The following describes step S206 "NOTIFY OF DATA CHANGE" in the processing flow in Fig. 3 in detail with reference to Fig. 19. Specifically, the change notifying part 1008 in the plan coordination system 1000 determines a result of the processing at step S205 in Fig. 3, in other words, whether the value of a process node has changed (step S501), and the change notifying part 1008 executes step S502 if the value has changed (step S501: Yes), or ends the present flow if the value has not changed (step S501: No).

At step S502, the change notifying part 1008 acquires one process node yet to be subjected to this processing flow from among process nodes of which value has changed at the above-described step S205. Subsequently, the change notifying part 1008 in the plan coordination system 1000 determines whether the process node acquired at the above-described step S502 has setting of a plan coordination link and a changed component is specified as a coordination variable (step S503). As a result of this determination, the change notifying part 1008 executes step S504 if the process node has the setting of a plan coordination link and the component specified as a coordination variable has changed (step S503: Yes), or ends the present processing flow in other cases (step S503: No).

At step S504, the change notifying part 1008 determines whether the plan coordination link set to the process node acquired at the above-described step S502 is bidirectional. Specifically, the change notifying part 1008 checks whether there exist both of a plan coordination link having a link source that is the process node acquired at step S502 and a plan coordination link having a link destination that is the process node acquired at step S502, and determines that the plan coordination link is bidirectional if the both exist. The change notifying part 1008 executes step S505 if it is determined that the plan coordination link is bidirectional (S504: Yes), or executes step S507 in other cases (S504: No).

At step S505, in any one of the following cases 1 to 3, the change notifying part 1008 determines that a notification is needed, or determines, in other cases, that no notification is needed.
Case 1: the setting of a plan coordination link is such that a change of the process node acquired at step S502 is prioritized. In this case, the plan coordination system 1000 acquires a plan coordination link having a link source that is the process node acquired at step S502, checks the value of the priority direction 913 between plans as components of this plan coordination link, and determines, if this value is "link source", that such setting is made that a change of the process node acquired at step S502 is prioritized.
Case 2: different from the above-described case 1; and no change has occurred in a process node as the link source of another plan coordination link. In this case, the plan coordination system 1000 acquires a plan coordination link having a link destination that is the process node acquired at step S502, and acquires a process node as the link source of the acquired plan coordination link (process node A). The plan coordination system 1000 searches the coordination variable change history information 3 by using the plan name of a plan including the process node A, a process name, and the process job name of a process job represented by the process node A as search keys. If this search result includes a record identified by using, as search keys, the plan name of the plan including the process node acquired at step S502, the process name, and the process job name of the process job represented by the process node acquired at step S502, the plan coordination system 1000 determines that the process node as the link source of the other plan coordination link has a change history. If the record is not acquired as a result of the present procedure, the plan coordination system 1000 determines that no change has occurred in the process node as the link source of the other plan coordination link.
case 3: different from the above-described cases 1 and 2; and the plan including the process node acquired at step S502 is such a plan that the plan definition information read at step S205 includes a change from the original plan definition information.

The following describes the coordination variable change history information 3. Fig. 20 illustrates the structure of a record of the coordination variable change history information 3 and an exemplary value belonging to the record. The coordination variable change history information 3 is a table of a component of which value has changed among components of the process node, which is stored by the plan coordination system 1000. In a record of this coordination variable change history information 3, a history ID 151 is an identification number for uniquely identifying history information. A change target plan name 152 is a plan name for identifying a plan including the component of which value has changed. A change target process name 153 is a process name for identifying a process including the component of which value has changed. A change target process job name 154 is a process job name for identifying a process job including the component of which value has changed. A node ID 155 is the node ID of a process node identified by the change target plan name 152, the change target process name 153, and the change target process job name 154. A change target variable name 156 is the name of the component of which value has changed. A changed value 157 is the value of the component after the change. A pre-notification state ID 158 is an identification number for identifying plan coordination model state information before the change of the value is reflected. A pre-notification state ID 159 is an identification number for identifying plan coordination model state information after the change of the value is reflected.

The flow in Fig. 19 is described again. The change notifying part 1008 in the plan coordination system 1000 executes step S507 if it is determined that a notification is needed at step S505 (step S506:Yes), or executes step S509 if it is determined that no notification is needed (step S506:No).

At step S507, the change notifying part 1008 changes the value of a process node as the link destination of a plan coordination link or sets a restriction condition, and registers the content of a change to the coordination variable change history information 3. Specifically, the change notifying part 1008 changes the value of a component specified by the link destination coordination variable name 112 among components of the process node as the link destination of the plan coordination link so that the value of a component specified by the link source coordination variable name 107 among components of a process node as the link source of the plan coordination link is the restriction condition 114, or sets the restriction condition.

The change notifying part 1008 changes the value of a job node related to a process node of which value has changed at step S507, and generates the restriction condition (step S508). Specifically, the change notifying part 1008 executes the following procedure.

### <Change of Value of Job node>

The change notifying part 1008 executes the following if the process job start time or process job end time of the process node has changed at step S507.
(1) A case in that the process job type of the process node of which value has changed at step S507 is "start" or "resume" . The change notifying part 1008 acquires a job node coupled with the process node of which value has changed at step S507 through an inter-process job link, and changes the value of the job start time of the acquired job node to the process job end time of the process node of which value has changed at step S507.
(2) A case in that the process job type of the process node of which value has changed at step S507 is "end" or "pause". The change notifying part 1008 acquires a job node coupled with the process node of which value has changed at step S507 through an inter-process job link, and changes the value of the job end time of the acquired job node to the process job start time of the process node of which value has changed at step S507.

### <Generation of Restriction Condition>

If the job flow rate total value of the process node has changed at step S507, the change notifying part 1008 acquires a process including the process node of which value has changed at step S507, acquires job nodes representing jobs as the start job and the end job of the acquired process, follows a job layer link from the job node representing the start job to the job node representing the end job, and generates an expression representing the sum of job flow rates of job nodes between the job nodes representing the start and end jobs by using a variable indicating the job flow rate of the job node. The change notifying part 1008 generates such a restriction condition that the value of the generated expression is equal to the job flow rate total value of the process node at step S507.

In addition to such a restriction condition that the sum of job flow rates is equal to the job flow rate total value of the process node at step S507, a restriction condition indicating a magnitude relation may be set by allowing an inequality sign to be set to an inter-process job link.

Subsequently, the change notifying part 1008 determines whether all process nodes of which values changed at step S205 in the processing flow in Fig. 3 has been processed (step S509), and executes step S510 if all process nodes have been processed (step S509: Yes) or step S502 if not all process nodes have been processed (step S509: No).

At step 510, the change notifying part 1008 transmits the changed value of the job node and the generated restriction condition from step S508 to the relevant plan generating apparatus 1300, and instructs regeneration of a plan. The relevant plan generating apparatus 1300 is the plan generating apparatus 1300 in charge of generation of a plan including the job node changed at step S508.

While the present invention has been described in detail with reference to exemplary embodiments, it is to be understood that the present invention is not limited to the disclosed exemplary embodiments. The scope of the present invention is to be accorded the broadest interpretation so as to encompass all such modifications. For example, although the present embodiment describes the example of planning jobs related to a railway travel and the like, this description does not intend to limit the range of application of the present invention. In an example of production management, the present invention is applicable to coordination of production plans of a plurality of manufacturing processes, coordination of a production plan of each manufacture process and a vehicle allocation plan of a delivery hub, and coordination of a middle- or long-term production plan and a daily production plan, for example.

The present embodiment allows organizations that manage plans coordinated with each other to efficiently and swiftly execute consistent coordination between the plans while maintaining confidentiality of information on the plans as appropriate.

The description in the present specification reveals at least the following. In other words, in the above-described plan coordination system, the processing device may notify the data to a management device of the other plan in the change notification processing when a priority between plans in a coordinate relation specified by the user through an input device or a predetermined terminal is lower for the other plan than the plan.

This allows a plan coordination to be reliably performed based on a relation having different priorities between plans, such as the in-yard shunting plan for an operation diagram change needed to be strictly followed in a train travel plan.

In the above-described plan coordination system, the processing device may receive, in the coordination data reception processing, through an input device or a predetermined terminal, definitions by the user for an item coordinated between plans, a restriction condition at coordination related to the item, and an evaluation formula that calculates a predetermined evaluation index with definition data as an input among process procedures indicated by the public data of each plan, and may apply, in the plan coordination model generation processing, the definitions of the coordinated item, the restriction condition, and the evaluation formula thus received to the definition data of the plan, and generates a plan coordination model specifying a coordination relation of processes between the plans so that the restriction condition is satisfied and an evaluation index acquired by the evaluation formula satisfies a predetermined reference.

This allows a plan coordination model to be generated at a change of the definition data so that, in addition to the restriction condition, various evaluation references such as economic efficiency and instantaneity specified by the user in advance are satisfied for the entire plan.

In the above-described plan coordination system, the processing device may specify, in the change notification processing, a restriction condition specified by the user and notifies a management device of the other plan of the data.

This allows a plan coordination to be reliably performed based on such a restriction condition that either value must be higher, such as a relation between the time of a train travel in a train travel plan and the execution time of an in-yard shunting executed in accordance with this time.

In the above-described plan coordination system, the processing device may notify, in the plan coordination model change processing, the data changed along with the change to a management device of the other plan when a priority between plans in a coordination relation specified by the user through an input device or a predetermined terminal is lower for the other plan than the corresponding plan.

This allows a plan coordination to be reliably performed based on a relation having different priorities between plans, such as the in-yard shunting plan for an operation diagram change needed to be strictly followed in a train travel plan.

In the above-described plan coordination system, the processing device specifies, in the plan coordination model change processing, a restriction condition specified by the user and notifies a management device of the other plan of the data.

This allows a plan coordination to be reliably performed based on such a restriction condition that either value must be higher, such as a relation between the time of a train travel in a train travel plan and the execution time of an in-yard shunting executed in accordance with this time.

In the above-described plan coordination system, the processing device may notify, in the plan coordination model change processing, the data changed along with the change to a management device of the other plan when the plan to which the change event has occurred has a priority higher than a priority of the other plan in the coordination relation.

This allows a high priority to be allocated to a plan to be most prioritized such as a plan to which an emergent event has occurred, thereby swiftly and reliably achieving a plan coordination based on this prioritization.

### [Reference Signs List]

- 1000: Plan coordination system
- 1001: Memory
- 1002: Program
- 1003: Plan definition information reading part
- 1004: Public data generating part
- 1005: Coordination data receiving part
- 1006: Plan coordination model generating part
- 1007: Change monitoring part
- 1008: Change notifying part
- 1009: Plan change acquiring part
- 1010: Plan coordination model changing part
- 1011: Plan result managing part
- 1100: Storage device
- 1200: Display device
- 1201: Input device
- 1202: Processing device
- 1203: Communication device
- 1204: Data path
- 1300: Plan generating apparatus
- 1301: Memory
- 1302: Storage device
- 1303: Display device
- 1304: Input device
- 1305: Processing device
- 1306: Communication device
- 1307: Data path

## Claims

1. A plan coordination system comprising:
a storage device configured to store definition data of plans coordinated with each other; and
a processing device configured to perform:
a public data generation processing that extracts information on a process procedure in each plan from the definition data of the plans and stores the extracted information on the process procedure as public data opened to administrators of the plans in the storage device,
a coordination data reception processing that receives, through an input device or a predetermined terminal, definitions by a user for an item coordinated between the plans and a restriction condition at coordination related to the item among the process procedures indicated by the public data of each plan,
a plan coordination model generation processing that applies the definitions of the coordinated item and the restriction condition thus received to the definition data of the plan, and thereby generates a plan coordination model that specifies a coordination relation of processes between the plans,
a change monitoring processing that monitors a change event where the definition data of each plan is changed through the input device or the predetermined terminal,
a change notification processing that determines whether data of the plan having the change event occurred is related at least to the coordinated item in the coordination relation of the plan coordination model including the plan, and notifies the data to a management device of another plan as a coordination destination of the plan in the coordination relation, when the data is related at least to the coordinated item in the coordination relation,
a plan change acquisition processing that receives a plan generation result of the other plan reflecting the change event of the data from the management device of the other plan,
a plan coordination model change processing that changes the plan coordination model by applying the received plan generation result to the coordination relation in the plan coordination model, and notifies a management device of another plan, which has, in the plan coordination model, the coordination relation with the plan of which at least data of the coordinated item is changed along with the change of the plan coordination model, of the data changed along with the change of the plan coordination model, and
a plan result management processing that repeatedly executes the change monitoring processing, the change notification processing, the plan change acquisition processing, and the plan coordination model change processing until a completion instruction is received for all the plans through the input device or the predetermined terminal, and outputs generation results of the plans to an output device or a predetermined terminal when the completion instruction is received for all the plans.

2. The plan coordination system according to claim 1, wherein, in the change notification processing, the processing device notifies the data to the management device of the other plan, when the other plan out of the plans in the coordination relation specified by the user through the input device or the predetermined terminal has a priority lower than a priority of the corresponding plan.

3. The plan coordination system according to claim 1, wherein the processing device:
receives, in the coordination data reception processing, through the input device or the predetermined terminal, definitions by the user for an item coordinated between plans, a restriction condition at coordination related to the item, and an evaluation formula that calculates a predetermined evaluation index with the definition data as an input among the process procedures indicated by the public data of each plan; and
applies, in the plan coordination model generation processing, the definitions of the coordinated item, the restriction condition, and the evaluation formula thus received to the definition data of the plan, and thereby generates a plan coordination model specifying a coordination relation of processes between the plans so that the restriction condition is satisfied and an evaluation index acquired by the evaluation formula satisfies a predetermined reference.

4. The plan coordination system according to claim 1, wherein when notifying the data to the management device of the other plan in the change notification processing, the processing device makes the notification with the restriction condition specified by the user.

5. The plan coordination system according to claim 1, wherein, in the plan coordination model change processing, the processing device notifies the data changed along with the change to the management device of the other plan, when the other plan out of the plans in the coordination relation specified by the user through the input device or the predetermined terminal has a priority lower than a priority of the plan.

6. The plan coordination system according to claim 1, wherein when notifying the data to the management device of the other plan in the plan coordination model change processing, the processing device makes the notification with the restriction condition specified by the user.

7. The plan coordination system according to claim 1, wherein, in the plan coordination model change processing, the processing device notifies the data changed along with the change to the management device of the other plan, when the plan having the change event occurred has a priority higher than a priority of the other plan in the coordination relation.

8. A plan coordination method that causes
a computer including a storage device configured to store definition data of plans coordinated with each other, to perform:
a public data generation processing that extracts information on a process procedure in each plan from the definition data of the plans and stores the extracted information on the process procedure as public data opened to administrators of the plans in the storage device,
a coordination data reception processing that receives, through an input device or a predetermined terminal, definitions by a user for an item coordinated between the plans and a restriction condition at coordination related to the item among the process procedures indicated by the public data of each plan,
a plan coordination model generation processing that applies the definitions of the coordinated item and the restriction condition thus received to the definition data of the plan, and thereby generates a plan coordination model that specifies a coordination relation of processes between the plans,
a change monitoring processing that monitors a change event where the definition data of each plan is changed through the input device or the predetermined terminal,
a change notification processing that determines whether data of the plan having the change event occurred is related at least to the coordinated item in the coordination relation of the plan coordination model including the plan, and notifies the data to a management device of another plan as a coordination destination of the plan in the coordination relation, when the data is related at least to the coordinated item in the coordination relation,
a plan change acquisition processing that receives a plan generation result of the other plan reflecting the change event of the data from the management device of the other plan,
a plan coordination model change processing that changes the plan coordination model by applying the received plan generation result to the coordination relation in the plan coordination model, and notifies a management device of another plan, which has, in the plan coordination model, the coordination relation with the plan of which at least data of the coordinated item is changed along with the change of the plan coordination model, of the data changed along with the change of the plan coordination model, and
a plan result management processing that repeatedly executes the change monitoring processing, the change notification processing, the plan change acquisition processing, and the plan coordination model change processing until a completion instruction is received for all the plans through the input device or the predetermined terminal, and outputs generation results of the plans to an output device or a predetermined terminal when the completion instruction is received for all the plans.
